# EUROPÄISCHE PATENTSCHRIFT

(11) **EP 2 135 014 B1**
(45) Veröffentlichungstag und Bekanntmachung des Hinweises auf die Patenterteilung: **03.08.2011**
(21) Anmeldenummer: 08734999.9
(22) Anmeldetag: 03.04.2008
(51) Int. Cl.: F24J 2/54, F24J 2/10

(54) **VERFAHREN UND VORRICHTUNG ZUR NUTZUNG VON SONNENENERGIE**
METHOD AND DEVICE FOR THE UTILIZATION OF SOLAR ENERGY
PROCÉDÉ ET DISPOSITIF D'UTILISATION DE L'ÉNERGIE SOLAIRE

(30) Priorität: 03.04.2007 DE 102007016084; 26.10.2007 DE 102007051359
(43) Veröffentlichungstag der Anmeldung: 23.12.2009
(73) Patentinhaber: Isomorph S.r.l., 34013 Duino-Aurisina (TS) (IT)
(72) Erfinder: GRASSMANN, Walter, 96052 Bamberg (DE)
(74) Vertreter: Eisenführ, Speiser & Partner
(86) Internationale Anmeldenummer: PCT/EP2008/002661
(87) Internationale Veröffentlichungsnummer: WO 2008/119564

(56) Entgegenhaltungen:
- WO-A-80/00271
- DE-A1- 2 716 108
- DE-A1- 19 932 646
- FR-A- 2 453 369
- US-A- 4 063 543
- US-A- 4 297 521
- US-A1- 2006 201 498

## Beschreibung

Die vorliegende Erfindung betrifft eine Vorrichtung und ein Verfahren zur Nutzung von Sonnenenergie.

Die Sonne strahlt auf jeden Quadratmeter der Erdoberfläche bei senkrechtem Einfall etwa ein Kilowatt an Energie ein. Eine Vielzahl von unterschiedlichen Verfahren und Vorrichtungen zur Nutzung dieser von der Sonne eingestrahlten Sonnenenergie ist bekannt.

Bei der Photovoltaik wird das Sonnenlicht direkt in elektrischen Strom umgesetzt. Die Kosten dieses Verfahrens sind allerdings sehr hoch, zur Zeit kostet ein Quadratmeter Photovoltaik-Sonnenzellen etwa € 700,--. Das Verfahren weist etwa eine Energieeffizienz von 20 % auf.

Ein alternativer Ansatz besteht darin, von der Sonne eingestrahlte Energie zur Erzeugung von Hitze zu nutzen. Hierbei sind einige Verfahren und Vorrichtungen bekannt, bei denen Sonnenlicht mittels nachführbarer Spiegel konzentriert wird. Die so zu erzielende Hitze dient beispielsweise zum Erhitzen eines Öles oder zum Erhitzen eines flüssigen Salzes. Das Öl beziehungsweise Salz erwärmt Wasser, um Wasserdampf herzustellen. Mit dem erzeugten Wasserdampf wird eine Dampfturbine zur Stromerzeugung mittels eines Stromgenerators angetrieben. Dieser Ansatz ist technologisch realisierbar, erweist sich allerdings als verhältnismäßig umständlich und teuer.

Ein weiterer Ansatz besteht darin, Parabolspiegelanlagen vorzusehen, bei denen eine ausreichend große, geschlossene Spiegelfläche der Sonne nachgeführt wird. Dieses Nachführen erfolgt durch Schwenken und Neigen der Parabolspiegelanlage, sodass eine Ansteuerung von zwei Achsen notwendig ist. Eine solche Anlage weist in der Regel infolge der großen Spiegelfläche ein hohes Gewicht auf, so dass es nur unter entsprechenden Schwierigkeiten mit ausreichender Genauigkeit auf die Sonne ausgerichtet werden kann. Der Brennpunkt des Systems verschiebt sich mit dem Sonnenstand, was die Nutzung der gebündelten Sonnenstrahlen als Wärmeenergie erschwert. Ein Beispiel eines solchen Systems ist eine "solar dish", wie sie etwa unter http://www.solarpaces.org/resources/technologies.html beschrieben wird.

Eine einfachere Nachführung lässt sich mit Rinnenspiegelsystemen erreichen, da diese nur um eine Achse bewegt werden müssen. Die Rinnenspiegel erhitzen eine Röhre, die in ihrer Brenngerade verläuft. Bei der technischen Realisierung entsteht ein Problem dahingehend, dass lange Röhrensysteme zu justieren, zu erhitzen und gegen Wärmeverluste zu schützen sind, was die Anlagen wiederum teuer macht. Ein Beispiel für ein solches System ist das Andasol-Projekt (http://ww.solarmillennium.de/).

Beim sogenannten "Solarturm"-Konzept wird eine Vielzahl von Spiegeln auf einen gemeinsamten Punkt an der Spitze des "Solarturms" ausgerichtet. Hierbei muss wiederum jeder der Spiegel einzeln über zwei Achsen gesteuert werden, was angesichts der dabei nötigen Genauigkeit das Verfahren teuer macht (siehe z. B. http://www.bmu.de/pressemitteilungen/pressemitteilungen_ab_22112005/pm/3740 5.php). Der Preis einer solchen Anlage beträgt etwa € 1.100,-- pro Quadratmeter Spiegelfläche und liegt damit bei einer Energieeffizienz von etwa 10 % noch oberhalb des Preises für die Photovoltaik.

Ein weiteres Beispiel für ein besagtes "Solarturm"-Konzept ist aus FR 2 354 590 bekannt. Der hierin beschriebene Heliostat hat eine Hauptdrehachse, die mit entsprechendem Hilfsmittel eine langsame Bewegung um die eigene Achse zum Folgen des Sonnenstandes ausführen kann. Die Reflektoren sind jeweils auf Nebendrehachsen befestigt, die senkrecht zu der Hauptachse angeordnet sind und jeweils mit geeigneten Hilfsmitteln eine Bewegung um die eigene Achse ausführen können. Auch hier ist eine Steuerung der einzelnen Spiegel über zwei Achsen notwendig.

Eine Notwendigkeit zur Nachführung von Spiegelsystemen zur Konzentration von Sonnenlicht ergibt sich daraus, dass aus Sicht der Erde die Sonne scheinbar eine ebene Kreisbahn um die Erde durchläuft. Die Ebene dieser Kreisbahn kann hierbei durch einen Einheitsvektor beschrieben werden, der senkrecht auf dieser Ebene steht. Infolge der Neigung der Erdachse gegenüber der Umlaufbahn ändert sich die Richtung dieses Einheitsvektors im Laufe eines Jahres, was sich darin äußert, dass die Mittagshöhe der Sonne, also die scheinbare Höhe der Sonne über dem Horizont, im Laufe des Jahres variiert.

Die bekannten Vorrichtungen und Verfahren zur Nutzung von Sonnenenergie sind konstruktiv aufwendig und zum Teil teuer in Anschaffung und Betrieb.

Aufgabe der vorliegenden Erfindung ist es daher, eine alternative Vorrichtung und ein alternatives Verfahren zur Nutzung von Sonnenenergie bereitzustellen, bei denen die Probleme der bekannten Vorrichtungen und Verfahren vermieden oder zumindest reduziert werden.

Gelöst wird diese Aufgabe durch eine Vorrichtung zur Nutzung von Sonnenenergie mit den Merkmalen, wie sie in Anspruch 1 definiert sind.

Gelöst wird diese Aufgabe ebenso durch ein Verfahren zur Nutzung von Sonnenenergie mit den Merkmalen, wie sie in Anspruch 13 definiert sind.

Merkmale vorteilhafter Ausführungsformen der Erfindung sind in den Unteransprüchen definiert.

Die erfindungsgemäße Vorrichtung umfasst zunächst ein Ziel und eine Anzahl von Reflektoren zur Umlenkung von Sonnenstrahlen auf das Ziel. Hierbei sind die Reflektoren jeweils um eine Achse schwenkbar angeordnet, um eine Nachführung der Reflektoren nach dem Azimut der Sonne im Laufe eines Tages zu erlauben, um also die Reflektoren an die scheinbare Bewegung der Sonne über den Himmel im Tagesverlauf anzupassen. Die jeweiligen Achsen sind Bestandteil einer Achsanordnung, die zur Nachführung nach der Mittagshöhe der Sonne im Laufe eines Jahres neigbar ist. Damit ist die Vorrichtung die Änderung der scheinbaren Sonnenbahn aufgrund des Winkels zwischen der Erdachse und der Umlaufebene der Erde um die Sonne anpassbar.

Mit dem Schwenken eines Spiegels oder Reflektors um eine Achse, die wie der oben angesprochene Einheitsvektor senkrecht auf der scheinbaren Sonnenbahnebene steht, können die von der Sonne einkommenden Sonnenstrahlen über den ganzen Tag hinweg auf das gleiche Ziel umgelenkt werden. Im Fall eines ebenen Spiegels stellt dieses Ziel eine Fläche in etwa der Größe des Spiegels dar, während bei entsprechend gewölbtem Spiegel die Strahlen auch im Wesentlichen auf einen Punkt reduziert werden können. Der Bereich, auf den die Sonnenstrahlen umgelenkt werden, wird üblicherweise auch als "heiße Fläche" oder "hot spot" bezeichnet.

Werden mehrere Reflektoren auf diese Weise auf ein gemeinsames Ziel ausgerichtet, können damit die einfallenden Sonnenstrahlen im Zielbereich konzentriert werden, sodass hier eine erhöhte Lichtintensität (Leistung pro Flächeneinheit) vorliegt. Beim erfindungsgemäßen Verfahren und bei der erfindungsgemäßen Vorrichtung ist im Tagesverlauf lediglich eine Nachführung der Reflektoren nach dem Azimut der Sonne notwendig, also nach der (Himmels-)Richtung, aus der die Sonnenstrahlen einfallen, wobei sich diese Nachführung mit einem Schwenken der Reflektoren um die jeweilige Achse realisieren lässt. Der sich im Laufe des Jahres scheinbar ändernden Sonnenbahn wird dadurch Rechnung getragen, dass die Achse, um die ein Reflektor im Laufe des Tages geschwenkt wird, durch Neigen einer dieser Achse aufnehmenden Achsanordnung angepasst wird.

In einer bevorzugten Ausführungsform ist die Achsanordnung ausgestaltet, sodass die Achse durch ein Neigen senkrecht zu einer Sonnenbahnebene ausrichtbar ist. Mit einer senkrecht zur Sonnenbahn ausgerichteten Achse werden die Sonnenstrahlen beim Schwenken des jeweiligen Reflektors im Wesentlichen in der Sonnenbahnebene ausgelenkt, sodass auf diese Weise eine besonders einfache Führung der Sonnenstrahlen auf das Ziel erreicht werden kann.

In einer anderen bevorzugten Ausführungsform der vorliegenden Erfindung weist die Achsanordnung eine Vielzahl von Achsen auf und ist so ausgestaltet, dass die Achsen quer zu einer zu den Achsen parallelen Ebene neigbar sind. Wird die Achsanordnung im Betrieb so ausgerichtet, dass die Achsen im Wesentlichen in Ost-West-Richtung nebeneinander angeordnet sind, wobei die Reflektoren der Sonne zugewandt sind, so können die Achsen durch ein Neigen quer zu der durch die Achsen aufgespannten Ebene an die Änderung der scheinbaren Sonnenbahnebene im Lauf des Jahres angepasst werden.

In einer weiteren Ausführungsform der vorliegenden Erfindung weist die Achsanordnung eine Vielzahl von Achsen auf und ist so ausgestaltet, dass die Achsen in einer zu den Achsen parallelen Ebene neigbar sind. Eine wie zuvor beschrieben entlang der Ost-West-Richtung ausgerichtete Achsanordnung weist am Morgen beziehungsweise am Abend eine vergleichsweise geringe effektive Fläche gegenüber der Sonne auf. Wenn nun die effektive Fläche gegenüber der Sonne zur Abend- oder Morgenzeit erhöht sein soll, oder eine Ausrichtung in Ost-West-Richtung nicht möglich ist, so kann mit einer Achsanordnung, die ein Neigen der Achsen in einer zu den Achsen parallelen Ebene erlaubt, auch eine Ausrichtung der Achsanordnung im Extremfall entlang einer Nord-Süd-Richtung realisiert werden, wobei die Neigung der Achsen an die Mittagshöhe der Sonne beziehungsweise die Neigung der scheinbaren Sonnenbahnebene anpassbar ist.

In vorteilhafter Weise kann die Achsanordnung so ausgestaltet sein, dass sie ein Neigen der Achsen sowohl in einer zu den Achsen parallelen Ebene als auch quer zu einer solchen Ebene erlaubt.

In einer weiteren bevorzugten Ausführungsform der vorliegenden Erfindung sind wenigstens zwei Reflektoren um eine gemeinsame Achse schwenkbar. Mehrere Reflektoren können einer gemeinsamen Achse zugeordnet werden, sodass zum Schwenken dieser Reflektoren beispielsweise nur ein Antreiben dieser Achse nötig ist. Sind mehrere Reflektoren einer Achse zugeordnet, so können diese mehreren Reflektoren durch Ausrichten der gemeinsamen Achse ebenfalls gemeinsam ausgerichtet werden, was den apparativen Aufwand verringert.

Gemäß einer weiteren vorteilhaften Ausführungsform weist die erfindungsgemäße Vorrichtung ein Schwenkantriebssystem zum gemeinsamen Schwenken mehrerer Reflektoren um die jeweilige Achse auf, insbesondere mit einer ersten Schwenkübersetzungsvorrichtung, über die für jeden der mehreren Reflektoren ein vorbestimmtes Schwenken in Abhängigkeit vom Schwenkantriebssystem bewirkbar ist. Werden mehrere Reflektoren gemeinsam durch ein Schwenkantriebssystem geschwenkt, so reduziert dies den apparativen Aufwand und erlaubt ein Steuern des Schwenkens der mehreren Reflektoren durch ein Steuern lediglich des gemeinsamen Schwenkantriebssystems. Ist eine Schwenkübersetzungsvorrichtung vorhanden, so können durch das Schwenkantriebssystem auch mehrere Reflektoren angetrieben werden, die ein jeweilig unterschiedliches Schwenkverhalten aufweisen sollen. Damit ist es möglich, sogar alle Reflektoren der erfindungsgemäßen Vorrichtung mittels eines einzigen Schwenkantriebssystems anzutreiben.

In einer weiteren vorteilhaften Ausführungsform der Erfindung weist die Vorrichtung eine einem Reflektor oder einer Achse zugeordnete Schwenkantriebsvorrichtung zum Schwenken des Reflektors oder der der Achse zugeordneten Reflektoren auf. Zudem kann vorteilhafterweise eine zweite Schwenkübersetzungsvorrichtung vorgesehen sein, über die für jeden der Reflektoren ein vorbestimmtes Schwenken in Abhängigkeit von der Schwenkantriebsvorrichtung bewirkbar ist. Statt eines gemeinsamen Antriebes für eine Vielzahl von Reflektoren, kann auch eine einzelne Ansteuerung des Schwenkens der Reflektoren über jeweilige separate Schwenkantriebsvorrichtungen vorgesehen sein. Die Schwenkantriebsvorrichtung kann alternativ auch zum Einwirken auf die Reflektoren einer gemeinsamen Achse ausgestaltet sein, sodass die Reflektoren dieser Achse gemeinsam und koordiniert antreibbar sind. Mit einer zweiten Schwenkübersetzungsvorrichtung kann wiederum ein unterschiedliches Schwenken der gemeinsam angetriebenen Reflektoren bewirkt werden.

In einer weiteren Ausführungsform der vorliegenden Erfindung ist ein Teil der Reflektoren gegenüber der jeweiligen Achse gekippt. Mit gekippten Reflektoren lassen sich die Sonnenstrahlen aus der scheinbaren Sonnenbahnebene heraus umlenken, was es ermöglicht, mehrere übereinander angeordnete Reflektoren so zu koordinieren, dass die durch sie umgelenkten Sonnenstrahlen auf ein Ziel fallen, das mit den Reflektoren nicht in einer zur Sonnenbahnebene parallelen Ebene liegt.

In einer weiteren Ausführungsform der vorliegenden Erfindung ist ein Teil der Reflektoren gegenüber der jeweiligen Achse kippbar. Vorteilhaft ist es hierbei, wenn ein Kippantriebssystem zum gemeinsamen Kippen mehrerer Reflektoren gegenüber ihrer jeweiligen Achse vorgesehen ist, insbesondere wenn auch eine erste Kippübersetzungsvorrichtung vorgesehen ist, über die für jeden der mehreren Reflektoren ein vorbestimmtes Kippen in Abhängigkeit vom Kippantriebssystem bewirkbar ist. Ebenfalls vorteilhaft ist das Vorsehen einer einem Reflektor oder einer Achse zugeordneten Kippantriebsvorrichtung zum Kippen des Reflektors oder der der Achse zugeordneten Reflektoren, insbesondere wenn auch eine zweite Kippübersetzungsvorrichtung vorgesehen ist, über die für jeden der Reflektoren ein vorbestimmtes Kippen in Abhängigkeit von der Kippantriebsvorrichtung bewirkbar ist.

Eine besonders bevorzugte Ausführungsform der vorliegenden Erfindung weist einen Antrieb zum Schwenken und Kippen mehrerer Reflektoren auf, wobei insbesondere eine Übersetzungsvorrichtung vorgesehen ist, über die für jeden der mehreren Reflektoren ein vorbestimmtes Schwenken und/oder Kippen in Abhängigkeit vom Antrieb bewirkbar ist.

Gemäß einer weiteren Ausführungsform der vorliegenden Erfindung ist das Ziel mit der Achsanordnung ortfest relativ zu der Achsanordnung gekoppelt, sodass ein Neigen der Achsanordnung in einer entsprechenden Bewegung des Ziels resultiert, das damit gegenüber den Reflektoren in der gleichen Relativposition verbleibt. Damit ist keine gesonderte Führung des Ziels zur Anpassung an die geänderte Sonnenbahnebene im Laufe des Jahres notwendig.

Alternativ kann vorgesehen werden, dass das Ziel unabhängig von der Achsanordnung bewegbar ist, insbesondere mittels eines gesonderten Zielantriebes.

Gemäß einer bevorzugten Ausführungsform der vorliegenden Erfindung weisen die Reflektoren Spiegel auf, insbesondere mit planen Spiegelflächen. Plane beziehungsweise ebene Spiegel sind besonders einfach und günstig in der Herstellung und erfordern keine besondere Bearbeitung, um im Rahmen der vorliegenden Erfindung eingesetzt zu werden.

Gemäß einer weiteren Ausführungsform der vorliegenden Erfindung sind die Reflektoren ausgestaltet, die umgelenkten Sonnenstrahlen zu bündeln, wobei die Reflektoren insbesondere konkave Spiegelflächen aufweisen.

Während bei ebenen Spiegelfläche eine Intensitätserhöhung der beim Ziel eintreffenden Strahlung durch das Addieren der von mehreren Reflektoren umgelenkten Strahlung erreicht wird, kann mit durch die Reflektoren gebündelten Sonnenstrahlen eine weitere Intensitätserhöhung erreicht werden.

Gemäß einer weiteren Ausführungsform der vorliegenden Erfindung ist das Ziel ausgestaltet, die darauf umgelenkten Sonnenstrahlen in vorbestimmter Weise umzulenken. Es ist nicht notwendig, dass die auf das Ziel umgelenkten Sonnenstrahlen direkt im Ziel zur Energieumsetzung eingesetzt werden, stattdessen ist es beispielsweise ebenfalls möglich, dass mehrere erfindungsgemäße Vorrichtungen kombiniert werden, wobei die jeweiligen Ziele so ausgestaltet sind, dass sie einen gemeinsamen "hot spot" bestrahlen. Setzt zudem beispielsweise eine gewünschte Nutzung eine Apparatur voraus, die zu schwer oder zu sperrig ist, um direkt als Ziel in die erfindungsgemäße Vorrichtung eingebracht zu werden, so können die umgelenkten Sonnenstrahlen vom Ziel der erfindungsgemäßen Vorrichtung auf diese Apparatur gerichtet werden, ohne dass eine Bewegung der Apparatur selbst nötig wäre.

Vorteilhafterweise weist das Ziel gemäß einer weiteren Ausführungsform der vorliegenden Erfindung wenigstens ein Reflektionselement auf, das von den Reflektoren eingehende Sonnenstrahlen zu einem Nutzelement bündelt und/oder umlenkt. Beispielsweise kann ergänzend zu oder anstelle von einer Bündelung der Sonnenstrahlen durch die Reflektoren eine derartige Intensitätserhöhung durch Bündelung ebenfalls mit einem geeigneten Reflektionselement des Zieles erreicht werden. Das Nutzelement kann auch getrennt vom Ziel angeordnet sein.

Gemäß einer weiteren bevorzugten Ausführungsform der vorliegenden Erfindung ist das Ziel mit einer Wärmekraftmaschine, insbesondere einer Heißgasturbine oder einer Dampfturbine, gekoppelt, wobei das Medium der Wärmekraftmaschine durch die umgelenkten Sonnenstrahlen erwärmbar ist. Beispielsweise kann mit Hilfe der umgelenkten Sonnenstrahlen Wasser zu Wasserdampf verdampft werden, mit dem eine Dampfturbine angetrieben werden kann, um elektrischen Strom zu erzeugen. Es ist ferner möglich, mit dem Umlenken der Sonnenstrahlen auf das Ziel Luft oder ein anderes Gas zu erwärmen, mit dem in geeigneter Weise eine Turbine angetrieben werden kann.

Gemäß einer weiteren Ausführungsform der vorliegenden Erfindung ist das Ziel mit einem Wärmespeicher gekoppelt, wobei das Medium des Wärmespeichers durch die umgelenkten Sonnenstrahlen erwärmbar ist. Es kann hierbei beispielsweise vorgesehen sein, etwa Paraffin mit Hilfe der umgelenkten Sonnenstrahlen auf eine Temperatur von 100°C bis 150°C zu erhitzen, wobei die damit im Paraffin gespeicherte Wärmeenergie zu einem anderen Zeitpunkt dem Paraffin wieder entzogen werden kann.

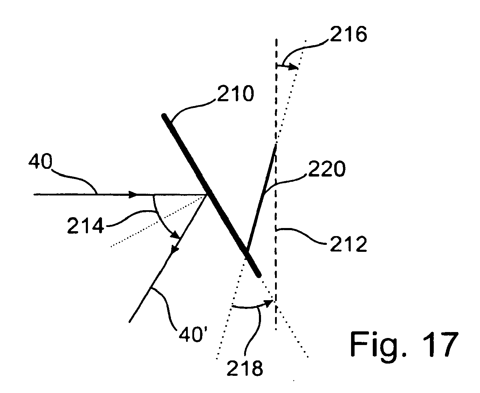

In einer weiteren vorteilhaften Ausführungsform weist die erfindungsgemäße Vorrichtung ferner die folgenden Merkmale auf. Ein erster Reflektor der Anzahl von Reflektoren ist zur Umlenkung von Sonnenstrahlen um einen ersten Ebenenwinkel aus einer Sonnenbahnebene vorgesehen und ist mit einer ersten Achse gekoppelt. Die erste Achse ist hierbei gegenüber einer Ausrichtungsebene der Achsanordnung um einen ersten Achswinkel gekippt und/oder kippbar, wobei der erste Reflektor gegenüber der ersten Achse um einen ersten Reflektorwinkel gekippt und/oder kippbar ist. Der erste Achswinkel ist dabei gegenläufig zu dem ersten Reflektorwinkel und dem ersten Ebenenwinkel. Mit anderen Worten ergibt sich in einer Seitenansicht beispielsweise eine Umlenkung der Reflektion eines horizontal einfallenden Sonnenstrahls entgegen dem Uhrzeigersinn mit einem Kippen der ersten Achse gegenüber einer vertikalen Ausrichtungsebene im Uhrzeigersinn und einem entsprechenden Kippen des ersten Reflektors gegenüber der ersten Achse entgegen dem Uhrzeigersinn (siehe auch beispielsweise Fig. 17).

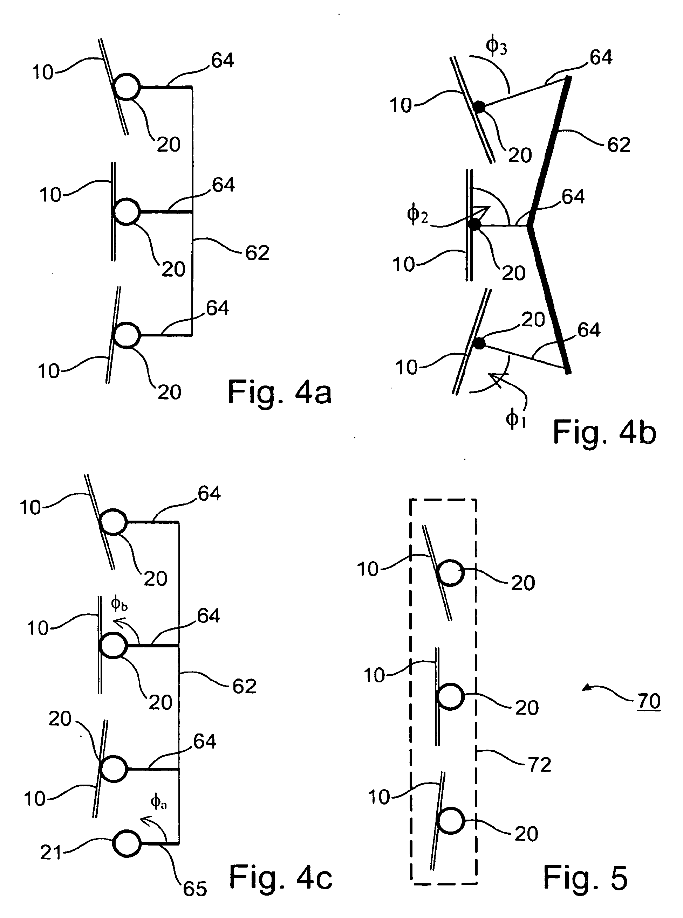

Die Ausrichtungsebene der Achsanordnung ist eine durch die Achsanordnung, vorzugsweise auch geometrisch, bestimmte Ebene, die beim Betrieb in vorbestimmter Weise zur Sonnenbahnebene ausgerichtet ist. Bei Vorrichtung, wie sie beispielsweise in den Figuren 4a - 4c, 5, 6 oder 16 gezeigt ist, ergibt sich die Ausrichtungsebene als die durch die Achsen der Vorrichtung aufgespannte Ebene. Ist die Achsanordnung als flache Tragstruktur ausgebildet, so sich ergibt sich die Ausrichtungsebene dieser Achsanordnung bevorzugt als die durch die Tragstruktur aufgespannte Ebene.

Ein ebener Spiegel, der senkrecht zur vermeintlichen Sonnenbahnebene ausgerichtet ist, reflektiert parallel zu dieser Sonnebahnebene auf ihn treffende Sonnenstrahlen in der gleichen Ebene. Ein entsprechend ausgerichteter Parabolspiegel zur Bündelung von Sonnenstrahlen bündelt die auf ihn treffenden Sonnenstrahlen in einen Punkt(bereich), der ebenfalls in der Sonnenbahn liegt. Mit derart ausgerichteten Spiegeln lassen sich zunächst also nur Ziele bestrahlen, die mit den Spiegeln gemeinsam in einer Ebene parallel zur Sonnenbahn liegen.

Bei einer Ausführungsform entsprechend den Ansprüchen 4 oder 5 ist ein Teil der Reflektoren gegenüber der jeweiligen Achse gekippt oder kippbar, wobei die Achse bevorzugt senkrecht zur Sonnenbahnebene ausgerichtet ist. Mit derart gekippten bzw. kippbaren Reflektoren lassen sich die Sonnenstrahlen aus der scheinbaren Sonnenbahnebene heraus umlenken, was es ermöglicht, mehrere übereinander angeordnete Reflektoren so zu koordinieren, dass die durch sie umgelenkten Sonnenstrahlen auf ein Ziel fallen, das mit den Reflektoren nicht in einer zur Sonnenbahnebene parallelen Ebene liegt. Hierbei kann sich allerdings bei einem größeren Ebenenwinkel, d.h. einer starken Umlenkung der Sonnenstrahlen aus der Sonnenbahnebene heraus, eine Schwierigkeit bei der Fokussierung der reflektierten Sonnenstrahlen auf das Ziel ergeben. Eine erfindungsgemäße Lösung hierzu, wie sie beispielsweise weiter oben beschrieben ist, besteht in einer entsprechenden Kompensierung durch Anpassung von Schwenk- und Kippwinkel der Reflektoren.

Es wurde nun weiter gefunden, dass sich in überraschender Weise auch bei größerem Ebenenwinkel eine gute und einfache Fokussierung durch das oben beschriebene Kippen der ersten Achse, die dem ersten Reflektor zugeordnet ist, gegenüber der Ausrichtungsebene der Achsanordnung, etwa einer Ebene senkrecht zur Sonnenbahnebene, insbesondere einer zur Einfallrichtung der Sonnenstrahlen senkrechten Ebene, und das Kippen des Reflektors gegenüber der ersten Achse erreichen lässt.

Der wenigstens eine weitere Reflektor der erfindungsgemäßen Vorrichtung dieser Ausführungsform kann seinerseits wie der erste Reflektor angeordnet sein, d.h. ebenfalls mit einer gegenüber der Achsanordnung gekippten Achse gekoppelt und gegenüber dieser gekippt sein, oder auch mit einer zur Ausrichtungsebene der Achsanordnung parallelen Achse verbunden sein. Der eine weitere Reflektor oder die weiteren Reflektoren bzw. die damit verbundenen Elemente der Vorrichtung können insbesondere auch so ausgestaltet sein, wie dies den Ansprüchen 4 bis 8 zu entnehmen ist.

In einer weiteren bevorzugten Ausführungsform der vorliegenden Erfindung weist die Vorrichtung einen zweiten Reflektor als einen der Reflektoren auf, der zur Umlenkung von Sonnenstrahlen um einen zweiten Ebenenwinkel, der vom dem ersten Ebenenwinkel abweicht, aus der Sonnenbahnebene vorgesehen und mit einer zweiten Achse gekoppelt ist, wobei die zweite Achse gegenüber der Ausrichtungsebene der Achsanordnung um einen zweiten Achswinkel gekippt und/oder kippbar ist, wobei der zweite Reflektor gegenüber der zweite Achse um einen zweiten Reflektorwinkel gekippt und/oder kippbar ist und wobei der zweite Achswinkel gegenläufig zu dem zweiten Reflektorwinkel und dem zweiten Ebenenwinkel ist. Somit lässt sich mit dem ersten Reflektor eine Umlenkung um einen ersten Ebenenwinkel und mit dem zweiten Reflektor eine Umlenkung um einen zweiten Ebenenwinkel erreicht, womit sich beispielweise zwei oder entsprechend mehrere "Etagen" von Reflektoren, die aufgrund angepasster Ebenenwinkel die einfallenden Sonnenstrahlen jeweils auf das gemeinsame Ziel ausrichten.

Gemäß einer weiteren Ausführungsform der vorliegenden Erfindung entspricht der Reflektorwinkel dem Ebenenwinkel und der Achswinkel entspricht einer gegenläufigen Hälfte des Ebenenwinkels. Im allgemeinen ist der Betrag des Ebenenwinkels bei einem Einfall der Sonnenstrahlen senkrecht der Ausrichtungsebene der Achsanordnung gleich der doppelten Differenz zwischen den Beträgen des Achswinkels und des Reflektorwinkels, da sich mit dem Kippen von Reflektor und Achse bei unverschwenktem Reflektor ein Winkel zwischen Reflektor und Ausrichtungsebene ergibt, der gleich dieser Differenz ist. Es wurde gefunden, dass sich mit der oben angeführten Anordnung besonders gute Ergebnisse erreichen lassen.

In einer bevorzugten Ausführungsform ist die Achsanordnung ausgestaltet, sodass die Ausrichtungsebene durch ein Neigen senkrecht zu einer Sonnenbahnebene ausrichtbar ist. Mit einer senkrecht zur Sonnenbahn ausgerichteten Ausrichtungsebene kann eine besonders einfache Führung der Sonnenstrahlen auf das Ziel erreicht werden.

In einer anderen bevorzugten Ausführungsform der vorliegenden Erfindung weist die Achsanordnung eine Vielzahl von Achsen auf und ist so ausgestaltet, dass die Achsen quer zur Ausrichtungsebene neigbar sind. Wird die Achsanordnung im Betrieb so ausgerichtet, dass die Achsen im Wesentlichen in Ost-West-Richtung nebeneinander angeordnet sind, wobei die Reflektoren der Sonne zugewandt sind, so können die Achsen durch ein Neigen quer zu der Ausrichtungsebene an die Änderung der scheinbaren Sonnenbahnebene im Lauf des Jahres angepasst werden.

In einer weiteren Ausführungsform der vorliegenden Erfindung weist die Achsanordnung eine Vielzahl von Achsen auf und ist so ausgestaltet, dass die Achsen parallel zur Ausrichtungsebene neigbar sind. Eine wie zuvor beschrieben entlang der Ost-West-Richtung ausgerichtete Achsanordnung weist am Morgen beziehungsweise am Abend eine vergleichsweise geringe effektive Fläche gegenüber der Sonne auf. Wenn nun die effektive Fläche gegenüber der Sonne zur Abend- oder Morgenzeit erhöht sein soll, oder eine Ausrichtung in Ost-West-Richtung nicht möglich ist, so kann mit einer Achsanordnung, die ein Neigen der Achsen parallel zur Ausrichtungsebene erlaubt, auch eine Ausrichtung der Achsanordnung im Extremfall entlang einer Nord-Süd-Richtung realisiert werden, wobei die Neigung der Achsen an die Mittagshöhe der Sonne beziehungsweise die Neigung der scheinbaren Sonnenbahnebene anpassbar ist.

In vorteilhafter Weise kann die Achsanordnung so ausgestaltet sein, dass sie ein Neigen der Achsen sowohl quer als auch parallel zur Ausrichtungsebene erlaubt.

Die in den vorherigen Absätzen beschriebenen Ausführungsformen mit den Merkmalen gemäß Anspruch 21 können in vorteilhafter Weise mit weiteren in dieser Anmeldung offenbarten Merkmalen kombiniert werden, insbesondere mit den in den Ansprüchen 6, 7 und 13 bis 20 definierten und damit in Zusammenhang stehenden Merkmalen.

Im Folgenden werden einzelne Aspekte der Erfindung unter Bezug auf die beiliegenden Zeichnungen näher erläutert.

Bei den Figuren 1a bis 16 handelt es sich nicht um Ausführungsformen der Erfindung, sondern um den Stand der Technik oder Beispiele, die das Verständnis der Erfindung erleichtern sollen.

Hierbei sind:
- Figuren 1a und 1b:: Darstellungen einer Anordnung zur Umlenkung von Son- nenstrahlen auf ein Ziel,
- Figuren 2a und 2b:: Darstellungen eines ersten Beispiels ,
- Figur 3: eine Darstellung eines zweiten Beispieles einer Vorrichtung,
- Figuren 4a, 4b und 4c: Darstellungen eines weiteren Aspektes eines Beispiels.
- Figur 5: eine Darstellung einer Achsanordnung ,
- Figur 6: eine Darstellung der Achsanordnung aus Figur 5 in anderer Ansicht,
- Figuren 7a und 7b: Darstellungen einer Vorrichtung in unterschiedlicher Ausrichtung,
- Figur 8: eine Darstellung eines weiteren Beispiels
- Figuren 9 bis 11: Darstellungen weiterer Beispiele mit konkaven Spiegeln,
- Figuren 12a und 12b: Darstellungen zur Erläuterung der Verhältnisse zwischen einfallendem und reflektiertem Lichtstrahl,
- Figur 13: eine Darstellung eines geneigten Spiegels mit zugeordneter Achse,
- Figuren 14a und 14b: Darstellungen eines zieles mit Nutzelement,
- Figur 15: eine Darstellung zur Erläuterung des Lichteinfalls zur Morgen- bezie- hungsweise Abendzeit bei nach Süden ausgerichteter Achsanord- nung,
- Figur 16: eine Darstellung von Achsanordnungen, mit in der durch die Achsen definierten Ebene geneigten Achsen,
- Figur 17: eine Darstellung eines ersten Aspektes einer erfindungsgemäßen Vorrichtung,
- Figur 18: eine Darstellung eines weiteren Ausführungsbeispieles der erfin- dungsgemäßen Vorrichtung,
- Figur 19: eine Darstellung eines weiteren Aspektes einer Vorrichtung gemäß der vorliegenden Erfindung,
- Figur 20: eine Darstellung einer Achsanordnung gemäß einem Aspekt der vorliegenden Erfindung,
- Figuren 21a und 21b: Darstellungen einer erfindungsgemäßen Vorrichtung in unterschiedlicher Ausrichtung, und
- Figur 22: eine Darstellung eines weiteren Ausführungsbeispiels der vorliegen- den Erfindung.

In den beiliegenden Zeichnungen sowie den Erläuterungen zu diesen Zeichnungen sind einander entsprechende Elemente mit entsprechenden Bezugszeichen gekennzeichnet.

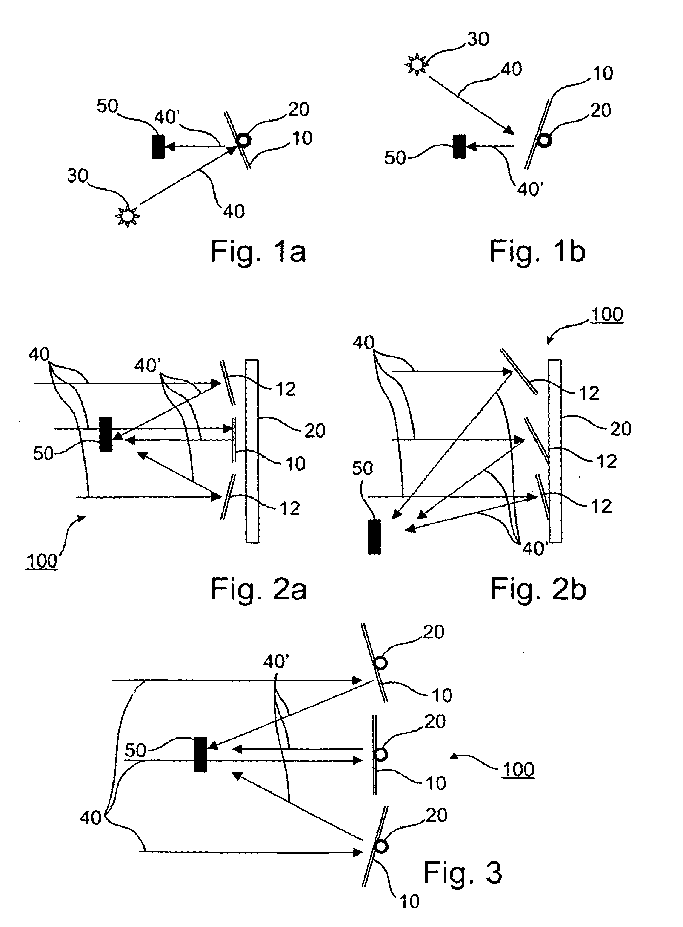

Fig. 1a zeigt einen Spiegel 10, der schwenkbar um eine Achse 20 angeordnet ist, um von der Sonne 30 ausgehende Sonnenstrahlen 40 auf einen hot-spot 50 als Ziel umzulenken. Die umgelenkten Sonnenstrahlen sind mit 40' bezeichnet.

Fig. 1b zeigt eine der Fig. 1a entsprechende Situation, wobei die Sonne 30 andere Position bezüglich der Anordnung aus Spiegel 10, Achse 20 und Ziel 50 angenommen hat.

In den Figuren 1a und 1b fällt die Zeichnungsebene mit der (scheinbaren) Sonnenbahn zusammen, wobei die Achse 20, um die der Spiegel 10 schwenkbar angeordnet ist, senkrecht auf der Zeichnungsebene steht.

Der um die Achse 20 drehbare beziehungsweise schwenkbare Spiegel 10, kann während des Tagesverlaufs derart nachgestellt werden, dass er das auf ihn fallende Sonnenlicht 40 stets auf die relativ zu der Achse 20 feststehende heiße Fläche 50 wirft.

Die beiden Figuren 1a und 1b veranschaulichen Positionen der Sonne zu verschiedenen Tageszeiten und die entsprechende Stellung des Spiegels dazu.

Fig. 2a zeigt ein erstes Beispiel einer Vorrichtung 100 mit einer Achse 20 und Reflektoren 10, 12, die schwenkbar um die Achse 20 angeordnet sind. Die Spiegel 12 sind gegenüber der Achse 20 geneigt, sodass einfallende Sonnenstrahlen 40 jeweils von den Spiegeln 10, 12 auf die heiße Fläche 50 als umgelenkte Strahlen 40' umgelenkt werden.

Fig. 2b zeigt eine Anordnung, die ähnlich ist zu der aus Fig. 2a, wobei allerdings alle Spiegel 12 gegenüber der Achse 20 geneigt sind, sodass die heiße Fläche 50 als Ziel außerhalb der Strahlengänge der einfallenden Strahlen 40 angeordnet ist.

In den Fig. 2a und 2b liegt die Sonnenbahnebene senkrecht zur Zeichnungsebene und ist parallel zu den einfallenden Strahlen 40. Dementsprechend steht die Achse 20 wie schon in Fig. 1 senkrecht auf der Sonnenbahnebene. Im wesentlichen unterscheiden sich die Fig. 2a und 2b nur durch die Anordnung der heißen Fläche 50 zu den Spiegeln und die entsprechend anders gegenüber der Achse 20 gekippten Spiegel 12. Die Anordnung von Fig. 2a bedingt, dass, sofern die Sonne (in Fig. 2a nicht dargestellt) die heiße Fläche 50 und der Spiegel 10 auf einer Linie liegen, die heiße Fläche 50 einen Schatten auf die Vorrichtung 100 wirft. Ein derartiger Schattenwurf tritt bei der Anordnung, wie sie in Fig. 2b gezeigt ist, nicht auf.

Fig. 3 zeigt ein zweites Beispiel einer Vorrichtung 100, wobei nebeneinander drei Spiegel 10 angeordnet sind, die um jeweilige Achsen 20 schwenkbar sind, wobei die Spiegel 10 wiederum so angeordnet sind, dass die einfallenden Sonnenstrahlen 40 auf die heiße Fläche 50 umgelenkt werden. Wie auch bei den Figuren 1a und 1b fällt bei Fig. 3 die Sonnenbahnebene mit der Zeichnungsebene zusammen.

Fig. 4a zeigt einen weiteren Aspekt eines Beispiels . Ähnlich zu der in Fig. 3 gezeigten Anordnung sind drei parallele Achsen 20 vorhanden, wobei jeweils Spiegel 10 schwenkbar um diese Achsen angeordnet sind. Zudem ist ein Schwenkantriebssystem 60 zum gemeinsamen Schwenken der Spiegel 10 um die jeweilige Achse 20 vorhanden. Das Schwenkantriebssystem weist eine Stange 62 auf, die jeweils über Hebel 64 mit der Kombination aus Spiegel 10 und Achse 20 verbunden ist, sodass ein Verschieben der Stange 62 über die Hebel 64 ein entsprechendes Schwenken der Spiegel 10 um die Achsen 20 bewirkt. Die Achsen 20 mit den dazugehörigen Spiegeln 10, sind somit über die Stange 62 und die Hebel 64 so verbunden, dass ein einziger Motor ausreicht, um alle Spiegel 10 im Laufe des Tages in geeigneter Weise auf die Sonne (nicht dargestellt) ausgerichtet zu halten, sodass das reflektierte Licht Stange 62 über die Hebel 64 ein entsprechendes Schwenken der Spiegel 10 um die Achsen 20 bewirkt. Die Achsen 20 mit den dazugehörigen Spiegeln 10, sind somit über die Stange 62 und die Hebel 64 so verbunden, dass ein einziger Motor ausreicht, um alle Spiegel 10 im Laufe des Tages in geeigneter Weise auf die Sonne (nicht dargestellt) ausgerichtet zu halten, sodass das reflektierte Licht immer die heiße Fläche (in Fig. 4a nicht dargestellt) bescheint. In der Anordnung von Fig. 4a führen alle drei Achsen 20 jeweils Drehungen um den gleichen Winkel aus. Wenn die Hebel 64 verschieden lang sind, wie dies in Fig. 4b dargestellt ist, so erfolgen die Drehungen um entsprechende verschiedene Winkel. Eine Drehung zum Beispiel des mittleren Spiegels um einen Winkel ΔΦ₂ geht deshalb einher mit einer Drehung des oberen Spiegels um einen kleineren Winkel ΔΦ₃. der Drehwinkel ΔΦ₃ ist also nicht gleich mit dem Drehwinkel ΔΦ₂, sondern eine Funktion des Drehwinkels ΔΦ₂, was durch eine geeignete Aufhängung der Spiegel bewerkstelligt werden kann. Entsprechende Aufhängungen sind dem Fachmann im Grundsatz bekannt, insofern wird hier darauf verzichtet, die Vielzahl möglicher Aufhängungen im einzelnen zu beschreiben.

Auf ähnliche Weise ist es möglich, mehrere einer gemeinsamen Achse zugeordnete Spiegel (siehe z.B. Spiegel 10, 12 in Fig. 2a oder Fig. 2b) unabhängig voneinander um jeweils voneinander verschiedene Winkel zu schwenken, zumal es nicht notwendig ist, dass alle einer gemeinsamen Achse zugeordnete Spiegel um identische Winkel verschwenkt werden. In Fig. 4c ist eine zusätzliche Achse 21 vorgesehen, die über einen Hebel 65 mit einer Spiegelanordnung ähnlich zu Fig. 4a verbunden ist. Infolge der unterschiedlichen Länge der Hebel 64, 65 ergibt sich bei einer Drehung der Achse 21 um einen Winkel Φₐ ein Verschwenken der Spiegel 10 jeweils um einen Winkel Φ_{b}, der vom Winkel Φₐ abweicht. Ordnet man mehrere Anordnungen, wie sie in Fig. 4c gezeigt sind, als "Etagen" beispielsweise übereinander an, so dass sich jeweils für jede der Achsen 20 aus Fig. 4c eine Anordnung ähnlich zu denen in Fig. 2a oder Fig. 2b ergibt, können die Spiegel einer "Etage" jeweils gemeinsam über die Achse 21 angesteuert werden. Sind dabei für verschiedene "Etagen" jeweils verschieden lange Hebel 65 vorgesehen, werden mehrere Spiegel, obgleich sie einer Achse zugeordnet sind (vgl. Fig. 2a,

Fig. 5 zeigt eine Achsanordnung 70 mit drei parallel angeordneten Achsen 20, denen jeweils ein Spiegel 10 zugeordnet ist, der um die jeweilige Achse 20 schwenkbar angeordnet ist. Die Achsanordnung 70 weist zudem einen Rahmen 72 auf, in dem die Achsen 20 angeordnet sind. Die Darstellung in Fig. 5 entspricht einer Ansicht in Längsrichtung der Achsen.

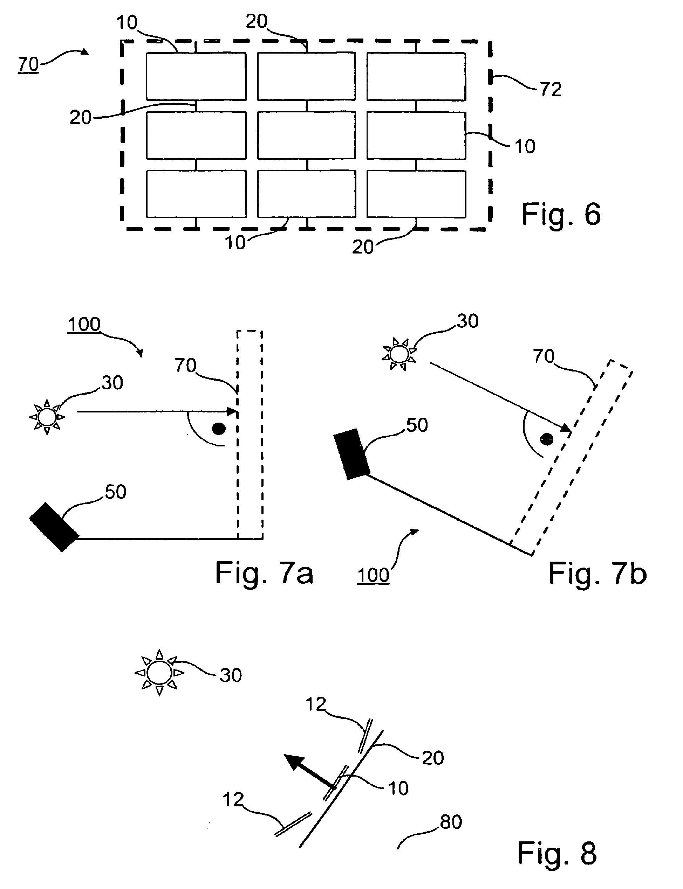

Fig. 6 zeigt die Achsanordnung 70 mit den Achsen 20, den entsprechenden Spiegeln 10 und dem Rahmen 72 aus Fig. 5, in einer Ansicht auf eine zu den Achsen 20 parallelen Ebene. Die Achsanordnung 70 weist drei Achsen 20 auf, denen jeweils drei Spiegel 10 zugeordnet sind, sodass die Achsanordnung 70 mit insgesamt 9 Spiegeln versehen ist.

In der Achsanordnung 70, die in Fig. 6 dargestellt ist, stehen die Achsen 20 im rechten Winkel zum unteren Teil des Rahmens 72. Eine Vorrichtung mit einer derartigen Achsanordnung 70 könnte aus Gründen der Einfachheit und somit einer Kostenersparnis in einfacher Weise auf einem ebenen Grund abgestellt werden, sodass der untere Teil des Rahmens 72 horizontal liegt, wie es in Fig. 6 angedeutet ist.

Die Fig. 7a und 7b zeigen jeweils eine Vorrichtung 100 mit Achsanordnung 70 mit daran gekoppeltem Ziel 50 in unterschiedlicher Ausrichtung. In den Figuren 7a und 7b besteht die Kopplung zwischen dem Ziel 50 und der Achsanordnung 70 in einer einfachen mechanischen Verbindung. In der Darstellung von Fig. 7a steht die (scheinbare) Sonnenbahnebene senkrecht auf der Zeichnungsebene, wie dies durch den Sonnenstrahl 40 angedeutet ist, der im rechten Winkel auf die Achsanordnung 70 trifft. Fig. 7b zeigt eine gegenüber der Darstellung in Fig. 7a geneigte Achsanordnung, mit entsprechend bewegtem Ziel 50, sodass die Achsanordnung 70 und das Ziel 50 auf die geänderte Sonnenbahnebene eingestellt sind.

Fig. 8 zeigt ein Beispiel mit einer Achse 20 und um diese Achse schwenkbaren Spiegeln 10, 12, wobei die Achse 20 als Bestandteil einer Achsanordnung gegenüber dem horizontalen Erdboden 80 so geneigt ist, dass ein senkrecht auf der Achse 20 stehender Vektor (angedeutet durch den Pfeil in Fig. 8) auf die Sonne 30 ausgerichtet ist. Die Spiegel 12 sind ähnlich zu den Fig. 2a und 2b gegenüber der Achse 20 geneigt, sodass von den Spiegeln 10, 12 reflektierte Sonnenstrahlen (hier nicht gezeigt) in einem Bereich zwischen der Sonne 30 und der Achse 20 zusammenlaufen und auf ein Ziel (nicht dargestellt) treffen.

Bei einer Achsanordnung, wie sie in Fig. 6 dargestellt ist, entspricht der in Fig. 8 dargestellte Pfeil einem Normalenvektor zu einer Ebene, die durch den Rahmen 72 beziehungsweise die Achsen 20 definiert ist. Auf der Nordhalbkugel wäre damit dieser Normalenvektor bei einer Ost-West-Ausrichtung der Anordnung 70 nach Süden ausgerichtet.

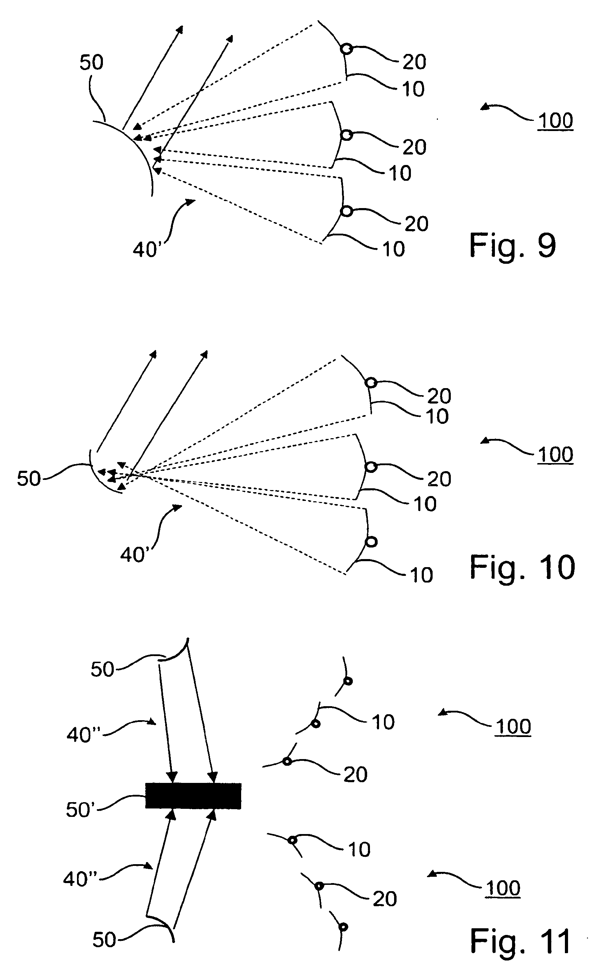

Bei den oben erläuterten Beispielen sind die Reflektoren durch ebene Spiegel 10 gebildet. Alternativ oder ergänzend zu ebenen Spiegeln können auch konkave Spiegel oder Reflektoren eingesetzt werden, die eine höhere Konzentration der Sonnenstrahlung ermöglichen und es zudem erlauben, einen parallelen Lichtstrahl aus den reflektierten Sonnenstrahlen 40' zu erzeugen, indem das konzentrierte, von den konkaven Spiegeln 10 gespiegelte Licht 40' an einem weiteren konvexen oder konkaven Spiegel 50 reflektiert wird, wie es in den Figuren 9 und 10 dargestellt ist.

In Fig. 9 ist eine Anordnung mit 3 konkaven Spiegeln 10 gezeigt, die um jeweilige Achsen 20 schwenkbar angeordnet sind. Die Spiegel 10 sind so ausgerichtet, dass einfallende Sonnenstrahlen (in Fig. 9 nicht gezeigt) umgelenkt und in Richtung auf das Ziel 50 konzentriert werden. Das Ziel 50 besteht in einem konvexen Spiegel, der die reflektieren Sonnenstrahlen 40' so reflektiert, dass sie zu einem parallelen Lichtstrahl umgelenkt werden.

Die Darstellung in Fig. 10 entspricht weitgehend der Darstellung in Fig. 9, wobei das Ziel 50 von einem konkaven Spiegel gebildet wird, der ebenfalls die von den Spiegeln 10 umgelenkten Sonnenstrahlen 40' parallel ausrichtet.

In Fig. 11 sind 2 der in Fig. 9 dargestellten Anordnungen kombiniert, wobei die Ziele 50 so ausgerichtet sind, dass die von ihnen umgelenkten Sonnenstrahlen 40" auf ein gemeinsames Ziel 50' fallen.

Die unterschiedlichen Reflektoren beziehungsweise Spiegel sind in den Figuren 9 bis 11 mit im Wesentlichen übereinstimmenden Krümmungsradien dargestellt. Bei einer Umsetzung können allerdings auch für unterschiedliche Spiegel verschiedene Krümmungsradien vorgesehen sein.

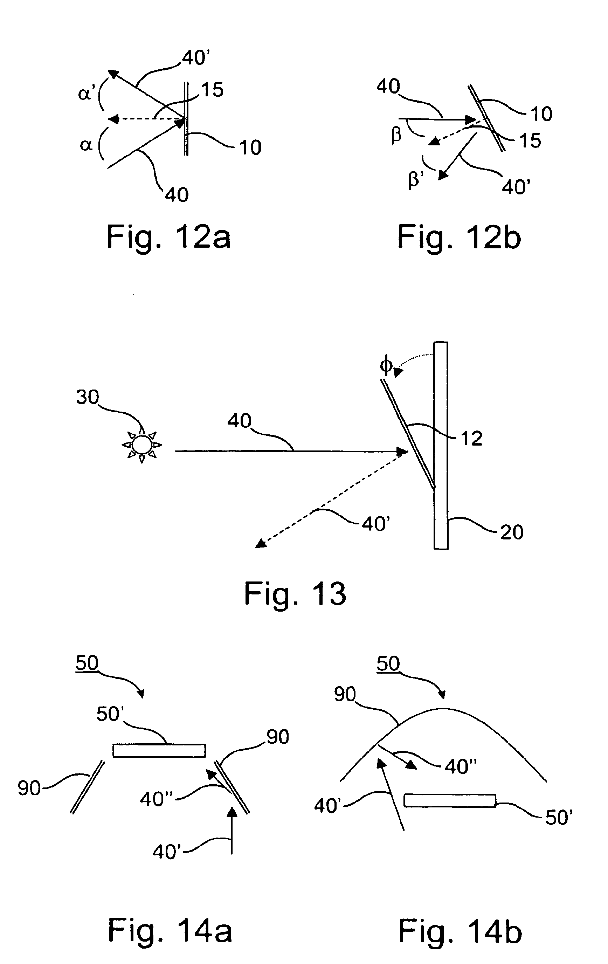

In Fig. 12a ist ein Spiegel 10 mit einem auf der Spiegeloberfläche senkrecht stehenden Normalenvektor 15 und einfallendem und reflektiertem Sonnenlicht 40, 40' dargestellt. In der Darstellung von Fig. 12a liegt die Sonnenbahnebene in der Zeichnungsebene. Die Projektion des Winkels zwischen dem Normalenvektor 15 und dem einfallenden Sonnenstrahl 40 auf die Umlaufebene der Sonne ist mit a bezeichnet. Die Projektion des Winkels zwischen dem Normalenvektor 15 und dem reflektierten Sonnenstrahl 40' auf die Umlaufebene der Sonne ist mit α' bezeichnet.

Solange der Normalenvektor 15 parallel zur Umlaufebene der Sonne liegt, der Spiegel 10 also senkrecht zur (scheinbaren) Umlaufebene beziehungsweise Bahnebene der Sonne ausgerichtet ist, sind α und α' identisch und der reflektierte Strahl 40' liegt in der Ebene der Umlaufbahn der Sonne.

In Fig. 12b ist eine Neigung des Spiegels 10 gegenüber der Sonnenbahnebene gezeigt, die sich aus dem einfallenden Sonnenstrahl 40 ergibt. In der Darstellung von Fig. 12b steht die Zeichenebene senkrecht zur Ebene der Umlaufbahn der Sonne. Die Neigung des Spiegels entspricht dem Winkel zwischen dem Normalenvektor 15 auf der Oberfläche des Spiegels 10 und dem einfallenden Sonnenstrahl und ist in Fig. 12b mit β bezeichnet. Wenn die Projektion des Normalenvektors 15 auf die Sonnenbahnebene und der einfallende Lichtstrahl 40 parallel sind, entspricht der Winkel β zwischen dem Normalenvektor 15 und dem einfallenden Lichtstrahl 40, dem Winkel β' zwischen dem Normalenvektor und dem reflektierten Lichtstrahl 40'.

Liegen die zuvor beschriebenen Spezialfälle nicht vor, wird im allgemeinen keine Identität zwischen α und α' beziehungsweise β und β' mehr bestehen, wobei die Differenzen zwischen α und α' und zwischen β und β' jeweils von α und β abhängen. Zum Beispiel weichen für α = 30° und β = 15° α und α' sowie auch β und β' um jeweils etwa 4° voneinander ab.

Weist eine Vorrichtung nun eine Vielzahl von Spiegeln auf, die, wie beispielsweise in Fig. 6 gezeigt, sowohl nebeneinander als auch übereinander angeordnet sind, ist ein Neigen der Spiegel gegenüber der jeweiligen Achse 20 erforderlich, um wie in den Figuren 2a und 2b dargestellt, ein gemeinsames Ziel 50 mit den reflektieren Sonnenstrahlen 40' zu treffen.

Ein derart geneigter Spiegel 12 ist in Fig. 13 dargestellt, wobei der Winkel zwischen dem geneigten Spiegel 12 und der zugeordneten Achse 20 mit Φ bezeichnet ist. Der von der Sonne 30 einfallende Sonnenstrahl ist infolge der Neigung des Spiegels 12 aus der Ebene der Sonnenbahn heraus umgelenkt und ist mit 40' bezeichnet.

Wird bei der Ausrichtung einer Achsanordnung beziehungsweise der der Achsanordnung zugeordneten Reflektoren die Abhängigkeit der Reflektionsrichtung von den Winkeln α und β nicht einbezogen, so kann es in Abhängigkeit der Geometrie der Vorrichtung dazu kommen, dass sich nicht alle der von den Reflektoren umgelenkten Sonnenstrahlen in einem gemeinsamen Bereich treffen. Dies kann im Beispiel ebener Spiegel dazu führen, dass, obgleich die von einem einzelnen Spiegel bestrahlte Fläche nicht größer als die Spiegelfläche ist, die von der Artordnung von Spiegeln beschienene Fläche dennoch größer als die einzelne Spiegelfläche ist, sich die jeweiligen Einzelflächen also nur teilweise überlappen.

In einer Form weist das Ziel 50 ein Nutz-element 50' auf, auf das mittels eines Reflektionselementes 90 von den Reflektoren beziehungsweise Spiegeln der Vorrichtung umgelenkte Sonnenstrahlen gebündelt beziehungsweise umgelenkt werden

In Fig. 14a sind neben dem Nutzelement 50' zwei Spiegel 90 angeordnet, die von den Reflektoren umgelenktes Sonnenlicht 40', das nicht direkt auf das Nutzelement 50' gerichtet ist umlenkt, sodass erneut umgelenkte Sonnenstrahlen 40" auf das Nutzelement fallen. In Fig. 14b ist ein weiteres Ausführungsbeispiel dargestellt, bei dem ein Fokussierspiegel 90 vorhanden ist, der umgelenkte Sonnenstrahlen 40', die an dem Nutzelement 50' vorbeigehen umlenkt, sodass die erneut umgelenkten Sonnenstrahlen 40" auf das Nutzelement 50' fallen.

Ergänzend kann vorgesehen sein, dass das Reflektionselement beweglich angeordnet sind und ihre Stellung im Tagesverlauf ändern können, sodass eine optimierte Umlenkung auf das Nutzelement möglich ist.

Alternativ oder ergänzend zu dem vorbeschriebenen kann vorgesehen sein, die Abhängigkeit der Reflektionsrichtung von der Ausrichtung der Reflektoren bei der Ausrichtung der Reflektoren mit in Betracht zu ziehen, sodass eine entsprechende Kompensierung erfolgt. Dies kann beispielsweise durch eine entsprechende Übersetzungsvorrichtung geleistet werden, wie sie beispielsweise in Fig. 4b dargestellt ist. Ebenso kann eine Kompensierung einer Ebene senkrecht zur Ebene der Umlaufbahn der Sonne vorgenommen werden. Mit einer geeigneten Übersetzungsvorrichtung kann die Nachführung der Reflektoren nach dem Sonnenstand im Laufe des Tages für einzelne Spiegel so eingerichtet sein, dass die von den einzelnen Spiegeln beschienenen Flächen einander im größeren Maße oder sogar vollständig überlappen, also eine bessere beziehungsweise vollständige "Fokussierung" erfolgt. Sofern nötig, lässt sich eine andauernde Fokussierung des Systems durch einfache mechanische Kompensierungsmechanismen erreichen.

Die Bewegung der einzelnen Spiegel kann hierbei gekoppelt bleiben, wobei in Folge der Übersetzungsvorrichtung einzelne Spiegel jedoch unterschiedliche Bewegungen ausführen.

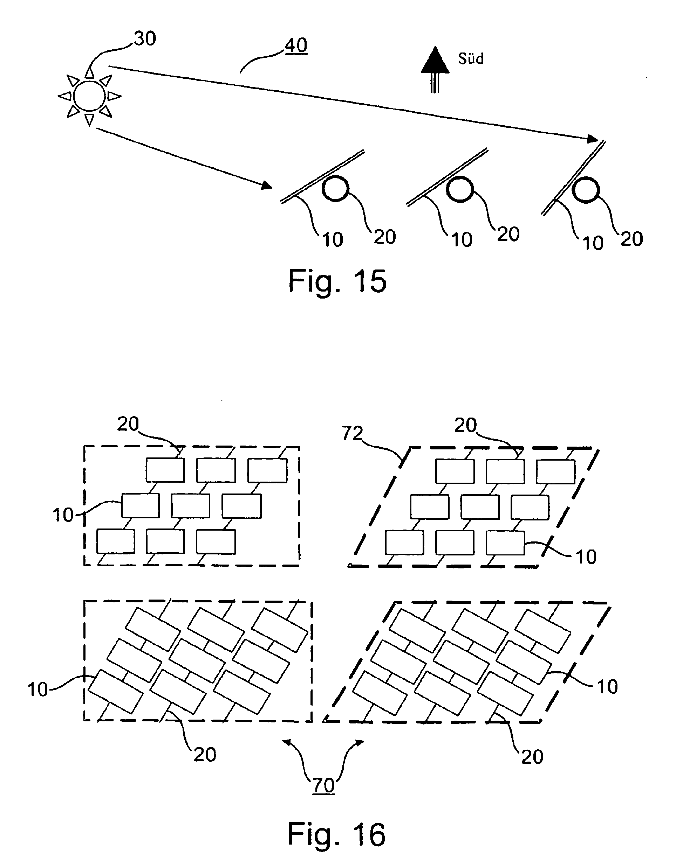

In Fig. 15 ist ein Beispiel dargestellt, bei dem die Achsanordnung der Achsen 20 mit den entsprechenden Spiegeln 10 in Ost-West-Richtung ausgerichtet ist, sodass ein Normalenvektor zu einer Ebene, die durch die Achsen 20 bestimmt ist, nach Süden zeigt. Wie in Fig. 15 angedeutet, steht die Sonne 30 am Morgen und am Abend in einem großen Winkel zum Normalenvektor der Anordnung, sodass die Vorrichtung gegenüber den einfallenden Sonnenstrahlen 40 in einem solchen Fall nur eine vergleichsweise geringe effektive Fläche aufweist.

In Fig. 16 sind Achsanordnungen illustriert, die dazu geeignet sind, auch am Morgen oder am Abend den jeweils einfallenden Sonnenstrahlen eine möglichst große effektive Fläche zu bieten, sodass mehr Sonnenenergie genutzt werden kann. Hierbei stehen die Achsen 20 nicht mehr senkrecht auf dem unteren Teil des Rahmens 72, wobei die Achsen 20 und der Rahmen 72 so ausgestaltet sind, dass der zwischen ihnen eingeschlossene Winkel durch ein Neigen entlang des Rahmens 72 an die sich im Laufe des Jahres ändernde Mittagshöhe der Sonne angepasst werden kann.

Fig. 17 zeigt eine Darstellung eines Aspektes einer erfindungsgemäßen Vorrichtung. Der ebene Spiegel 210 ist mit der Achse 220 schwenkbar gekoppelt, die ihrerseits mit einer Achsanordnung (nicht dargestellt) verbunden ist. Der Spiegel 210 ist gegenüber der Achse 220 um einen Reflektorwinkel 218 gekippt, d.h. in der Darstellung von Fig. 17 entgegen dem Uhrzeigersinn. Die Achse 220 ist ihrerseits gegenüber einer Ausrichtungsebene 212 der Achsanordnung (nicht dargestellt) um einen Achswinkel 216 gekippt, wobei sich die Kipprichtung der Achse 220 gegenüber der Ausrichtungsebene 212 entgegen der Kipprichtung des Spiegels 210 gegenüber der Achse 220 ergibt, d.h. in der Darstellung von Fig. 17 ist die Achse 220 gegenüber der Ausrichtungsebene 212 im Uhrzeigersinn gekippt. Der Spiegel 210 befindet sich in der Darstellung von Fig. 17 somit in einem Kippwinkel gegenüber der Ausrichtungsebene 212, der sich aus der Differenz der Beträge von Reflektorwinkel 218 und Achswinkel 216 ergibt. In Fig. 17 ist ferner ein senkrecht zur Ausrichtungsebene 212 einfallender Sonnenstrahl 40 dargestellt, der durch den Spiegel 210 reflektiert wird, wobei der reflektierte Son-Achse 220 gegenüber der Ausrichtungsebene 212 entgegen der Kipprichtung des Spiegels 210 gegenüber der Achse 220 ergibt, d.h. in der Darstellung von Fig. 17 ist die Achse 220 gegenüber der Ausrichtungsebene 212 im Uhrzeigersinn gekippt. Der Spiegel 210 befindet sich in der Darstellung von Fig. 17 somit in einem Kippwinkel gegenüber der Ausrichtungsebene 212, der sich aus der Differenz der Beträge von Reflektorwinkel 218 und Achswinkel 216 ergibt. In Fig. 17 ist ferner ein senkrecht zur Ausrichtungsebene 212 einfallender Sonnenstrahl 40 dargestellt, der durch den Spiegel 210 reflektiert wird, wobei der reflektierte Sonnenstrahl 40' einen Ebenenwinkel 214 mit dem einfallenden Sonnenstrahl 40 einschließt, dessen Betrag doppelt so groß ist, wie der Kippwinkel, um den der Spiegel 210 gegenüber der Ausrichtungsebene 212 gekippt ist, da die Ausrichtungsebene 212 senkrecht zur Sonnenbahnebene ausgerichtet ist. Die Sonnenbahnebene liegt senkrecht zur Papierebene der Darstellung in Fig. 17. Auch bei einem Schwenken des Spiegels 210 um die Achse 220 im Laufe eines Tages, um die Stellung des Spiegels an den (scheinbaren) Lauf der Sonne anzupassen, kann mit der erfindungsgemäßen Anordnung, eine Ausrichtung des reflektierten Strahls 40' auf das Ziel (nicht dargestellt) weitestgehend beibehalten werden. Die reflektierten Sonnenstrahlen 40' liegen nicht mehr in der Sonnenbahnebene, so dass das Ziel, das damit ebenfalls nicht mehr in der Sonnenbahnebene für den Spiegel 210 angeordnet ist, keinen Schatten auf den Spiegel 210 wirft, wie es vorkommen könnte, wenn sich Spiegel und Ziel mit der Sonne in einer gemeinsamen Ebene befinden.

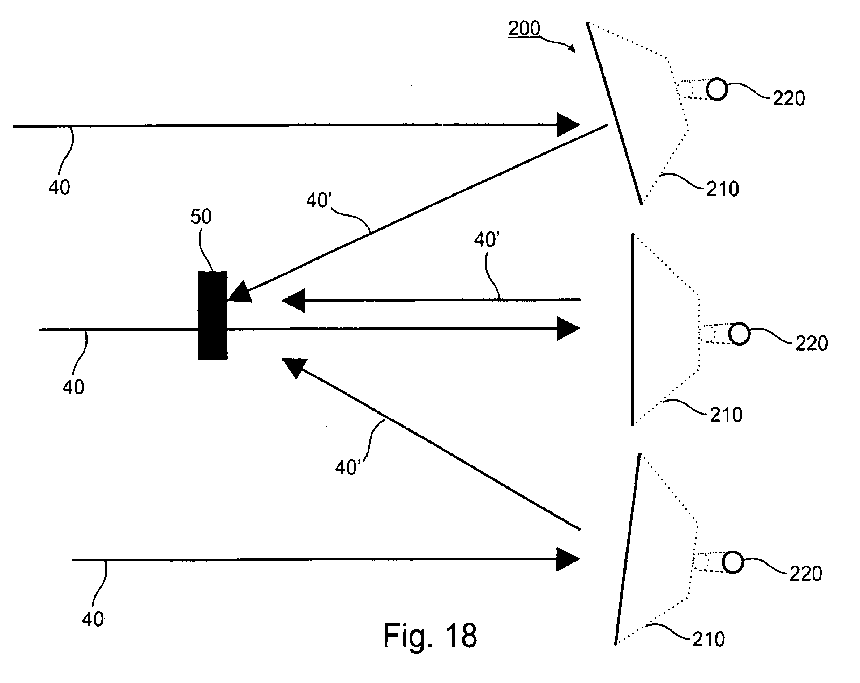

Fig. 18 zeigt ein Ausführungsbeispiel der erfindungsgemäßen Vorrichtung 200 mit jeweils drei Achsen 220 und drei Spiegeln 210, die schwenkbar um eine jeweilige Achse 220 angeordnet sind. Die Spiegel 210 sind gegenüber der entsprechenden Achse 220 gekippt und so angeordnet bzw. geschwenkt, dass einfallende Sonnenstrahlen 40 jeweils von den Spiegeln 210 auf die heiße Fläche 50 als umgelenkte Strahlen 40' umgelenkt werden. Der Kipp- oder Reflektorwinkel der Spiegel 210 gegenüber den Achsen 220 ist durch die skizzierte perspektivische Darstellung (gepunktete Linie) angedeutet. Gegenüber der Ausrichtungsebene (in Fig. 18 nicht dargestellt) sind die Achsen 220 ihrerseits um einen Achswinkel in Einfallrichtung der Sonnenstrahlen 40 gekippt, wobei auch dieses Kippen durch eine entsprechende perspektivische Darstellung (gepunktete Linie) angedeutet ist. Die Spiegel 210 sind somit auch gegenüber der Ausrichtungsebene der Achsanordnung (nicht dargestellt) gekippt, womit die Sonnenstrahlen 40, die in der (vermeintlichen) Sonnenbahnebene einfallen, die mit der Zeichnungsebene zusammenfällt, aus der Sonnenbahnebene heraus umgelenkt werden. Damit befindet sich das Ziel 50 auch nicht in der Zeichnungsebene von Fig. 18.

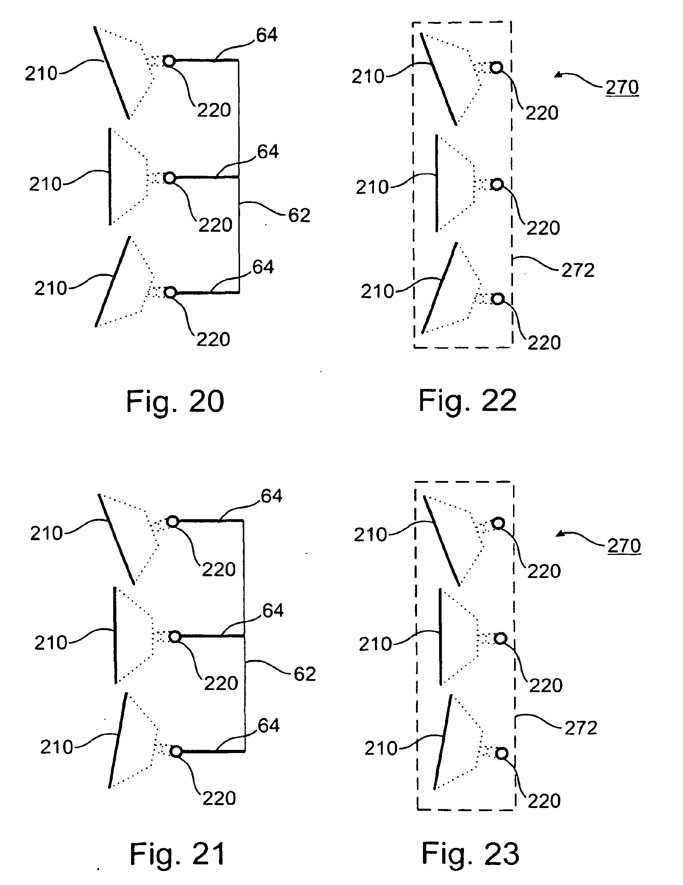

Fig. 20 zeigt einen weiteren Aspekt eines Ausführungsbeispiels der vorliegenden Erfindung. Ähnlich zu der in Fig. 18 gezeigten Anordnung sind drei parallele Achsen 220 vorhanden, wobei jeweils Spiegel 210 schwenkbar um diese Achsen 220 angeordnet sind. Zudem ist ein Schwenkantriebssystem 60 zum gemeinsamen Schwenken der Spiegel 210 um die jeweilige Achse 220 vorhanden. Das Schwenkantriebssystem weist eine Stange 62 auf, die jeweils über Hebel 64 mit der Kombination aus Spiegel 210 und Achse 220 verbunden ist, sodass ein Verschieben der Stange 62 über die Hebel 64 ein entsprechendes Schwenken der Spiegel 210 um die Achsen 220 bewirkt. Die Achsen 220 mit den dazugehörigen Spiegeln 210 sind somit über die Stange 62 und die Hebel 64 so verbunden, dass ein einziger Motor ausreicht, um alle Spiegel 210 im Laufe des Tages in geeigneter Weise auf die Sonne (nicht dargestellt) ausgerichtet zu halten, sodass das reflektierte Licht immer die heiße Fläche (in Fig. 20 nicht dargestellt) bescheint. In der Anordnung von Fig. 20 führen alle drei Achsen 220 jeweils Drehungen um den gleichen Winkel aus.

Wenn die Hebel 64 verschieden lang sind, so erfolgen die Drehungen um entsprechende verschiedene Winkel, was durch eine geeignete Aufhängung der Spiegel bewerkstelligt werden kann. Entsprechende Aufhängungen sind dem Fachmann im Grundsatz bekannt, insofern wird hier darauf verzichtet, die Vielzahl möglicher Aufhängungen im einzelnen zu beschreiben.

Es kann auch eine zusätzliche Achse vorgesehen sein, die über einen weiteren Hebel mit einer Spiegelanordnung ähnlich zu Fig. 20 verbunden ist. Infolge beispielsweise einer unterschiedlichen Länge der Hebel ergibt sich bei einer Drehung der Achse um einen Winkel Φa ein Verschwenken der Spiegel jeweils um einen Winkel Φb, der vom Winkel Φa abweicht. Ordnet man mehrere solcher Anordnungen als "Etagen" beispielsweise übereinander an, so können die Spiegel einer "Etage" jeweils gemeinsam über die Achse angesteuert werden.

Selbstverständlich können alternativ oder ergänzend zu dem hier beschriebenen Hebelsystemen auch andere Strukturen eingesetzt werden, beispielsweise Zahnräder und/oder Riemen.

Fig. 22 zeigt eine Achsanordnung 270 gemäß einem Aspekt der Erfindung mit drei parallel angeordneten Achsen 220, denen jeweils ein Spiegel 210 zugeordnet ist, der um die jeweilige Achse 220 schwenkbar angeordnet ist. Die Achsanordnung 270 weist zudem einen Rahmen 272 auf, in dem die Achsen 220 angeordnet sind. Die Darstellung in Fig. 22 entspricht einer Ansicht parallel zu der Ausrichtungsrichtung der Achsanordnung 270. Die durch den Rahmen 272 gegebene Tragstruktur bestimmt im in Fig. 22 gezeigten Ausführungsbeispiel auch die Ausrichtungsebene (nicht gezeigt) der Achsanordnung 270, wobei die Ausrichtungsebene hierbei in der Darstellung von Fig. 22 senkrecht auf der Zeichnungsebene und parallel zur Längsrichtung (von oben nach unten) der Darstellung des Rahmens 272 steht. Andere Anordnungen sind selbstverständlich ebenfalls möglich, wobei insbesondere keine Beschränkung auf symmetrische Ausführungen besteht.

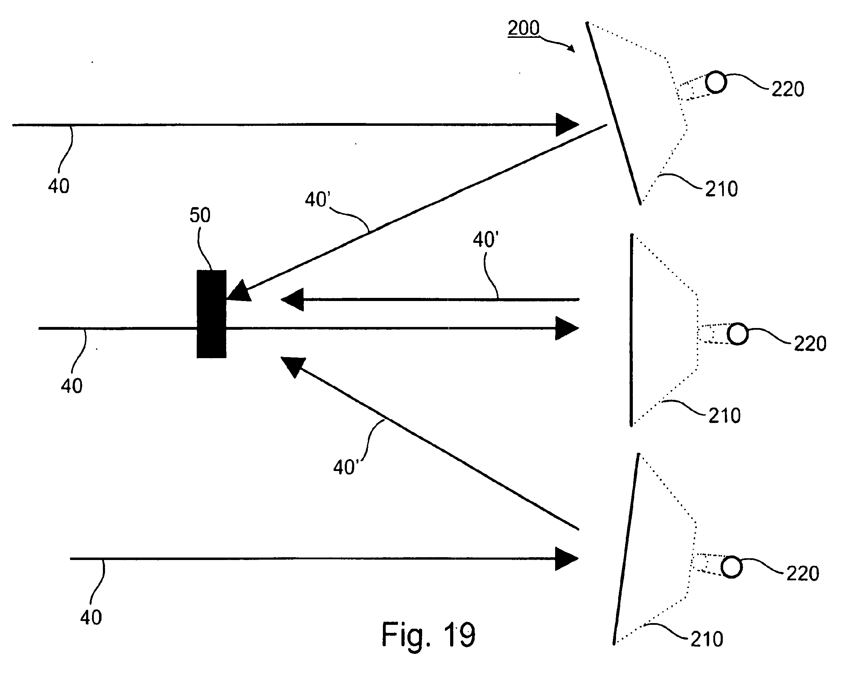

Die in den Fig. 19, 21 und 23 gezeigten Ausführungsformen oder Aspekte unterscheiden sich von denen, die in den Fig. 18, 20 und 22 dargestellt sind, lediglich darin, dass die die Achsen 220 in jeweiligen Achsenkippebenen gegenüber der Ausrichtungsebene (hier senkrecht zu den einfallenden Sonnenstrahlen) gekippt sind, die für die dargestellten Achsen 220 einer Ebene nicht parallel sind. Die Achsen 220 sind hier jeweils in einer eigenen Achsenkippebene verkippt, wobei hierbei eine Achsenkippebenen jeweils durch eine (hypothetische) unverkippte Achse (die in den Figuren 19, 21 und 23 senkrecht auf der Darstellungsebene stünde) und die verkippte Achse 220 definiert ist. Mit anderen Worten lässt sich sagen, dass die jeweiligen Achsen 220 mit einem Achswinkel gegenüber der Ausrichtungsebene (hier nicht dargestellt) gekippt sind, der (je nach Achse 220) zusätzlich zum Polaranteil (d.h. einem Kippwinkel in der Achsenkippebene) einen Azimutanteil (d.h. eine Ausrichtung in der Darstellungsebene von Fig. 19, 21 und 23 entsprechend einer Verdrehung der Achsenkippebene) aufweist. Bei den Darstellungen in Fig. 18, 20 und 22 ist der Azimutanteil Null. In den Darstellungen von Fig. 19, 21 und 23 sind die Achsen 220 jeweils im Azimut auf den Brennpunkt bzw. das Ziel 50 ausgerichtet. Andere Ausrichtungen, beispielsweise mit einen im Verhältnis größeren oder kleinen Azimutanteil sind ebenfalls möglich.

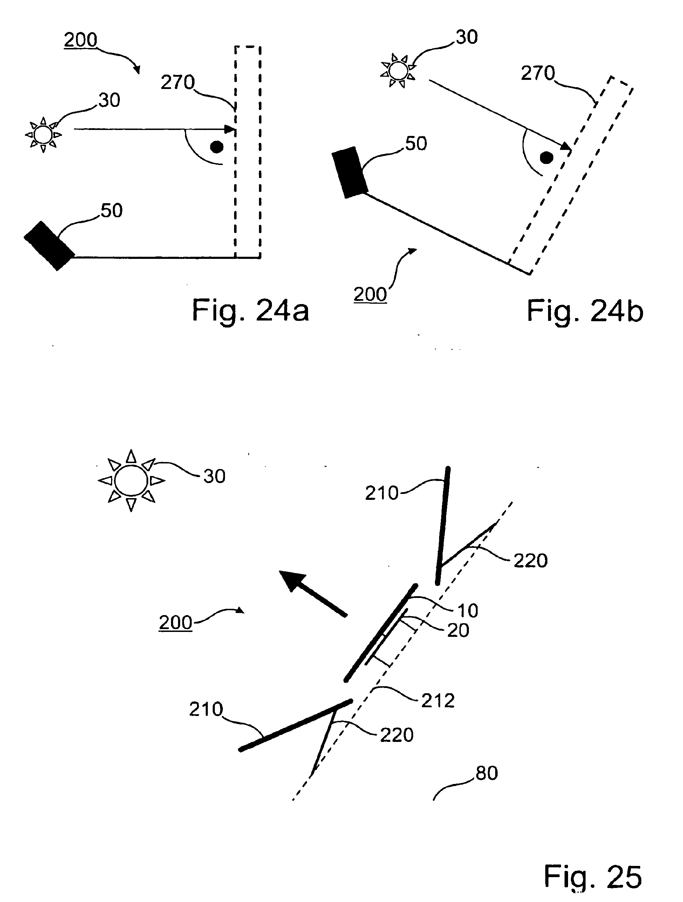

Die Fig. 24a und 24b zeigen jeweils eine erfindungsgemäße Vorrichtung 200 mit Achsanordnung 270 mit daran gekoppeltem Ziel 50 in unterschiedlicher Ausrichtung. In den Figuren 24a und 24b besteht die Kopplung zwischen dem Ziel 50 und der Achsanordnung 270 in einer einfachen mechanischen Verbindung. In der Darstellung von Fig. 24a steht die (scheinbare) Sonnenbahnebene senkrecht auf der Zeichnungsebene, wie dies durch den Sonnenstrahl 40 angedeutet ist, der im rechten Winkel auf die Ausrichtungsebene der Achsanordnung 270 trifft. Fig. 24b zeigt eine gegenüber der Darstellung in Fig. 24a geneigte Achsanordnung, mit entsprechend bewegtem Ziel 50, sodass die Achsanordnung 270 und das Ziel 50 auf die geänderte Sonnenbahnebene eingestellt sind.

Fig. 25 zeigt ein Ausführungsbeispiel der vorliegenden Erfindung. Die Vorrichtung 200 umfasst eine Vorrichtung mit Spiegeln 10 und Achsen 20, ähnlich zu Fig. 8, wobei die Achsen 20 senkrecht zu einer Einfallrichtung der Sonnenstrahlen von Sonne 30 ausgerichtet sind. In Fig. 25 ist im Querschnitt allerdings nur eine Achse 20 mit einem entsprechenden Spiegel 10 gezeigt. Die Achse 20 ist als Bestandteil einer Achsanordnung gegenüber dem horizontalen Erdboden 80 so geneigt, dass ein senkrecht auf der Achse 20 stehender Vektor (angedeutet durch den Pfeil in Fig. 25) auf die Sonne 30 ausgerichtet ist. Die in Fig. 25 gezeigte Vorrichtung 200 umfasst zudem Spiegel 210, die jeweils gegenüber einer entsprechenden Achse 220 gekippt sind, wobei die entsprechende Achse 220 jeweils ihrerseits gegenüber der durch die Achsanordnung gegebenen Ausrichtungsebene 212 gekippt sind. Durch die damit resultierende Verkippung der Spiegel 210 gegenüber der Ausrichtungsebene 212 (und damit auch gegenüber dem Spiegel 10) wird erreicht, dass die von den Spiegeln 10, 210 reflektierten Sonnenstrahlen zusammenlaufen und auf ein Ziel (nicht dargestellt) treffen.

Beispielhaft sind in den mit Bezug auf die Figuren 17 bis 25 beschriebenen Ausführungsformen ebene Spiegel vorgesehen. Andere Spiegelformen und Reflektorarten sind erfindungsgemäß jedoch ebenfalls möglich, beispielsweise entsprechend den in den Figuren 9 bis 11 dargestellten Ausführungen. Das gleiche gilt für die Ausführungen zur Ausgestaltung des Ziels, insbesondere hinsichtlich der Figuren 9 bis 11, 14a und 14b.

In den beiliegenden Zeichnungen sind zur vereinfachten Darstellung die Achsen jeweils mittig zu den entsprechenden Reflektoren angeordnet. Erfindungsgemäß kann jedoch auch eine andere Anordnung vorgesehen sein, solange ein Schwenken der Reflektoren um die jeweilige Achse möglich ist.

Mit der vorliegenden Erfindung wird eine Vorrichtung und ein Verfahren zur Nutzung der Sonnenenergie vorgestellt, die eine im Vergleich zu bekannten Verfahren und Vorrichtungen preisgünstigere Konstruktion erlauben.

In einer vorteilhaften Ausführungsform stellt die Erfindung eine Vorrichtung und ein Verfahren zur Nutzung von Sonnenenergie bereit, bei dem weder ein einzelner großer Spiegel insgesamt bewegt werden muss, noch eine Vielzahl von kleinen Spiegeln jeder für sich um eine jeweils andere Achse oder um zwei Achsen gedreht werden müssen, sondern mehrere Spiegel beziehungsweise Reflektoren auf beispielsweise zueinander parallelen Achsen (siehe etwa Fig. 3 oder 6) gedreht werden, wodurch eine im Vergleich zu bekannten Verfahren und Vorrichtungen preisgünstigere Konstruktion möglich wird: Ein Quadratmeter flacher Spiegel kostet etwa € 30,--. Der Rahmen, in dem die Achsen gehalten werden, kostet pro Quadratmeter cirka € 50,--, dazu kommen die Achse, einige Kleinteile, ein Schrittmotor mit Mikroprozessor in Summe von etwa € 100,-- bis - € 150,-- für Materialkosten. Hinzu kommen etwa € 50,-- für die Montage. Sammelt ein Quadratmeter Spiegelfläche im Jahr etwa 500 Kilowattstunden, so ergibt dies in 10 Jahren 5000 Kilowattstunden, womit sich ein Preis von etwa € 0,04 pro Kilowattstunde ergibt, der etwa dem Preis von Energie aus Öl oder Gas entspricht.

Bei einer beispielhaften Ausführungsform der vorliegenden Erfindung ist die Dreh- bzw. Schwenkachse eines jeden Spiegels nicht identisch mit einer zur Sonnenbahn senkrecht stehenden Achse und sie ist auch nicht parallel zu dieser Achse. Der Spiegel ist allerdings über die Achse mit Anordnung verbunden, die eine Ebene aufspannt, die bevorzugt senkrecht zur Einfallsrichtung der Sonnenstrahlen steht. Die Dreh- bzw. Schwenkachse des Spiegels um einen Winkel α verkippt, und der Spiegel ist auf dieser Achse so montiert, dass er einen Winkel 2·α mit ihr bildet. Auf diese Weise zeigt die Spiegelfläche stärker nach unten bzw. oben, wenn man den Spiegel dreht oder schwenkt. Der Spiegel wird beim Drehen (Schwenken) etwas abgesenkt (bzw. angehoben) und lenkt damit das Licht stärker nach unten (bzw. oben) ab.

Es werden nur zwei Achsen durch je einen Motor bewegt: ein Motor hält die Anordnung mit den Achsen, an denen die Spiegel montiert sind, im Laufe des Jahres senkrecht zur Bahn der Sonne, wobei dabei zumindest einige der Achsen selbst nicht senkrecht zur Bahn der Sonne ausgerichtet sind, da sie gegenüber der Ausrichtungsebene der Achsanordnung verkippt sind. Ein zweiter Motor dreht die Spiegel während des Tages um diese Achsen.

Bei einem einfachen Verkippen von Spiegeln gegenüber einer Achse, die senkrecht auf der (scheinbaren) Sonnenbahnebene steht, ergibt sich das Problem, dass von ihnen reflektierte Licht im allgemeinen sowohl in der Ebene der Sonne als auch senkrecht zu ihr nicht im gleichen Winkel wie das einfallende Licht ist, womit sich eine Fokussierung durch ein gemeinsames Ausrichten der Spiegel auf ein Ziel als schwierig darstellt.

Wenn beispielsweise der Spiegel um 5° geneigt sein soll, damit er das Licht um 10° nach unten ablenkt, wird in einer Ausführungsform die Spiegeldrehachse wird um 5° nach oben (gegenüber einer Montageebene) geneigt, wobei gleichzeitig der Winkel zwischen dieser Achse und dem Spiegel auf 10° eingestellt wird, so dass wiederum der Spiegel die erforderlichen 5° (zur Montageebene) nach unten zeigt. In einer Realisierung kann ein Spiegel entsprechend gekippt an einem Flügel eines herkömmlichen Scharniers montiert sein, wobei der andere Flügel des Scharniers an einem Montagerahmen befestigt ist, so dass die Scharnierachse gegenüber dem Montagerahmen gekippt ist.

Im Vergleich zu herkömmlichen Systemen wie Parabolspiegelsystemen (mit dreidimensionaler Spiegelkrümmung) Parabolrinnensystemen (mit zweidimensionaler Spiegelkrümmung) und Sonnentürmen ergeben sich erfindungsgemäß Vereinfachungen darin, dass preisgünstigere ebene Spiegel eingesetzt werden können, nicht ein großes und schweres Spiegelsystem bewegt werden muss (wie bei einem Parabolspiegel) sondern nur eine Anzahl von Achsen, die jeweils nur das Gewicht der ihnen zugeordneten Spiegel tragen, während ein großer Teil der haltenden Struktur (Rahmen) im Tagesverlauf nicht bewegt wird und es zudem nicht nötig ist, eine Vielzahl von Spiegeln in jeweils zwei Achsen zu verstellen, wie dies beim Sonnenturm vorgesehen ist.

## Patentansprüche

1. Vorrichtung (100, 200) zur Nutzung von Sonnenenergie mit:
- einem Ziel (50) und
- Reflektoren (10, 12, 210) zur Umlenkung von Sonnenstrahlen auf das Ziel,
wobei die Reflektoren (10, 12, 210) jeweils um eine Achse (20, 220) schwenkbar zur Nachführung nach dem Azimut der Sonne (30) im Laufe eines Tages sind, wobei die jeweilige Achse (20, 220) Bestandteil einer gemeinsamen Achsanordnung (70, 270) ist, die neigbar zur Nachführung nach der Mittagshöhe der Sonne (30) im Laufe eines Jahres ist, und die eine Ausrichtungsebene aufweist, die beim Betrieb senkrecht zur Sonnenbahnebene ausrichtbar ist,
**dadurch gekennzeichnet, dass** ein erster Reflektor (210) der Reflektoren zur Umlenkung von Sonnenstrahlen um einen ersten Ebenenwinkel (214) aus einer Sonnenbahnebene vorgesehen und mit einer ersten Achse (220) gekoppelt ist,
wobei die erste Achse (220) gegenüber der Ausrichtungsebene (212) der Achsanordnung (270) um einen ersten Achswinkel (216) gekippt und/oder kippbar ist,
wobei der erste Reflektor (210) gegenüber der ersten Achse (220) um einen ersten Reflektorwinkel (218) gekippt und/oder kippbar ist und
wobei der erste Achswinkel (216) gegenläufig zu dem ersten Reflektorwinkel (218) und dem ersten Ebenenwinkel (214) ist.

2. Vorrichtung (100, 200) nach Anspruch 1,
**gekennzeichnet durch** ein Schwenkantriebssystem zum gemeinsamen Schwenken mehrerer Reflektoren (10, 12, 210) um die jeweilige Achse (20, 220), insbesondere mit einer ersten Schwenkübersetzungsvorrichtung, über die für jeden der mehreren Reflektoren (10, 12, 210) ein vorbestimmtes Schwenken in Abhängigkeit vom Schwenkantriebssystem bewirkbar ist.

3. Vorrichtung (100, 200) nach einem der vorstehenden Ansprüche,
**gekennzeichnet durch** eine einem Reflektor (10, 12, 210) oder einer Achse (20, 220) zugeordnete Schwenkantriebsvorrichtung zum Schwenken des Reflektors (10, 12, 210) oder der der Achse (20, 220) zugeordneten Reflektoren (10, 12, 210), insbesondere mit einer zweiten Schwenkübersetzungsvorrichtung, über die für jeden der Reflektoren (10, 12, 210) ein vorbestimmtes Schwenken in Abhängigkeit von der Schwenkantriebsvorrichtung bewirkbar ist.

4. Vorrichtung (100) nach einem der vorstehenden Ansprüche,
**dadurch gekennzeichnet, dass** ein Teil der Reflektoren (12) gegenüber der jeweiligen Achse (20) gekippt ist.

5. Vorrichtung (100) nach einem der vorstehenden Ansprüche,
**dadurch gekennzeichnet, dass** ein Teil der Reflektoren (12) gegenüber der jeweiligen Achse (20) kippbar ist.

6. Vorrichtung (100) nach Anspruch 5,
**gekennzeichnet durch** ein Kippantriebssystem zum gemeinsamen Kippen mehrerer Reflektoren (12) gegenüber ihrer jeweiligen Achse (20), insbesondere mit einer ersten Kippübersetzungsvorrichtung, über die für jeden der mehreren Reflektoren (12) ein vorbestimmtes Kippen in Abhängigkeit vom Kippantriebssystem bewirkbar ist.

7. Vorrichtung (100) nach einem Ansprüche 5 oder 6,
**gekennzeichnet durch** eine einem Reflektor (12) oder einer Achse (20) zugeordnete Kippantriebsvorrichtung zum Kippen des Reflektors (12) oder der der Achse (20) zugeordneten Reflektoren (12), insbesondere mit einer zweiten Kippübersetzungsvorrichtung, über die für jeden der Reflektoren (12) ein vorbestimmtes Kippen in Abhängigkeit von der Kippantriebsvorrichtung bewirkbar ist.

8. Vorrichtung (100) nach einem der vorstehenden Ansprüche,
**gekennzeichnet durch** einen Antrieb zum Schwenken und Kippen mehrerer Reflektoren (10, 12), insbesondere mit einer Übersatzungsvorrichtung, über die für jeden der mehreren Reflektoren (10, 12) ein vorbestimmtes Schwenken und/oder Kippen in Abhängigkeit vom Antrieb bewirkbar ist.

9. Vorrichtung (100, 200) nach einem der vorstehenden Ansprüche,
**dadurch gekennzeichnet, dass** das Ziel (50) mit der Achsanordnung (70, 270) ortsfest relativ zu der Achsanordnung (70, 270) gekoppelt ist.

10. Vorrichtung (100, 200) nach einem der vorstehenden Ansprüche,
**dadurch gekennzeichnet, dass** das Ziel (50) unabhängig von der Achsanordnung (70, 270) bewegbar ist, insbesondere mittels eines Zielantriebes.

11. Vorrichtung (200) nach Anspruch 1,
**gekennzeichnet durch** einen zweiten Reflektor (210) der Reflektoren, der zur Umlenkung von Sonnenstrahlen um einen zweiten Ebenenwinkel, der von dem ersten Ebenertwinkel abweicht, aus der Sonnenbahnebene vorgesehen und mit einer zweiten Achse (220) gekoppelt ist,
wobei die zweite Achse (220) gegenüber der Ausrichtungsebene (212) der Achsanordnung um einen zweiten Achswinkel gekippt und/oder kippbar ist,
wobei der zweite Reflektor (210) gegenüber der zweite Achse (220) um einen zweiten Reflektorwinkel gekippt und/oder kippbar ist und
wobei der zweite Achswinkel gegenläufig zu dem zweiten Reflektorwinkel und dem zweiten Ebenenwinkel ist.

12. Vorrichtung (200) nach einem der Ansprüche 1 und 11,
**dadurch gekennzeichnet, dass** der Reflektorwinkel (218) dem Ebenenwinkel (214) und der Achswinkel (216) einer gegenläufigen Hälfte des Ebenenwinkels (214) entspricht.

13. Verfahren zur Nutzung von Sonnenenergie mit den Schritten:
- Bereitstellen einer Vorrichtung (100 200) zur Nutzung von Sonnenenergie mit einem Ziel (50) und Reflektoren (10, 12, 210), und
- Umlenken von Sonnenstrahlen auf das Ziel (50) mittels der Reflektoren (10, 12, 210).
wobei die Reflektoren (10, 12, 210) um eine jeweilige Achse (20, 220) zur Nachführung nach dem Azimut der Sonne (30) im Laufe eines Tages geschwenkt werden, wobei die jeweilige Achse (20, 220) Bestandteil einer gemeinsamen Achsanordnung (70, 270) ist, die zur Nachführung nach der Mittagshöhe der Sonne (30) im Laufe eines Jahres geneigt wird, und wobei eine Ausrichtungsebene beim Betrieb senkrecht zur Sonnenbahnebene ausgerichtet ist,
**dadurch gekennzeichnet, dass** das Bereitstellen
ein Anordnen eines ersten Reflektors (210) der Reflektoren, zur Umlenkung von Sonnenstrahlen um einen ersten Ebenenwinkel (214) aus einer Sonnenbahnebene vorgesehen und mit einer ersten Achse (220) gekoppelt ist,
ein Kippen der ersten Achse (220) gegenüber einer Ausrichtungsebene (212) der Achsanordnung (270) um einen ersten Achswinkel (216) und
ein Kippen des ersten Reflektors (210) gegenüber der ersten Achse (220) um einen ersten Reflektorwinkel (218) umfasst,
wobei der erste Achswinkel (216) gegenläufig zu dem ersten Reflektorwinkel (218) und dem ersten Ebenenwinkel (214) ist.

## Claims

1. A device (100, 200) for the utilisation of solar energy, with:
- a target (50) and
- reflectors (10, 12, 210) for deflecting solar rays on to the target,
the reflectors (10, 12, 210) each being pivotable about a spindle (20, 220) for tracking in accordance with the azimuth of the sun (30) during the course of one day, the respective spindle (20, 220) being a component of a common spindle arrangement (70, 270), which can be inclined to track in accordance with the noonday height of the sun (30) during the course of one year, and which has a plane of orientation which during operation can be oriented perpendicular to the plane of the path of the sun,
**characterised in that** a first reflector (210) of the reflectors is provided for deflecting solar rays by a first plane angle (214) out of a plane of the path of the sun and is coupled with a first spindle (220),
the first spindle (220) being tilted and/or tiltable by a first spindle angle (216) relative to the plane of orientation (212) of the spindle arrangement (270),
the first reflector (210) being tilted and/or tiltable by a first reflector angle (218) relative to the first spindle (220), and
the first spindle angle (216) being opposed to the first reflector angle (218) and the first plane angle (214).

2. A device (100, 200) according to Claim 1,
**characterised by** a pivot drive system for jointly pivoting a plurality of reflectors (10, 12, 210) about the respective spindle (20, 220), in particular with a first pivot transmission device, via which a predetermined pivoting can be brought about for each of the plurality of reflectors (10, 12, 210) dependent on the pivot drive system.

3. A device (100, 200) according to one of the preceding claims,
**characterised by** a pivot drive device, associated with a reflector (10, 12, 210) or a spindle (20, 220), for pivoting the reflector (10, 12, 210) or the reflectors (10, 12, 210) associated with the spindle (20, 220), in particular with a second pivot transmission device, via which a predetermined pivoting can be brought about for each of the reflectors (10, 12, 210) dependent on the pivot drive device,

4. A device (100) according to one of the preceding claims,
**characterised in that** some of the reflectors (12) are tilted relative to the respective spindle (20).

5. A device (100) according to one of the preceding claims,
**characterised in that** some of the reflectors (12) are tiltable relative to the respective spindle (20).

6. A device (100) according to Claim 5,
**characterised by** a tilt drive system for jointly tilting a plurality of reflectors (12) relative to their respective spindle (20), in particular with a first tilt transmission device, via which a predetermined tilting dependent on the tilt drive system can be brought about for each of the plurality of reflectors (12).

7. A device (100) according to one [of] Claims 5 or 6,
**characterised by** a tilt drive device, associated with a reflector (12) or a spindle (20), for tilting the reflector (12) or the reflectors (12) associated with the spindle (20), in particular with a second tilt transmission device, via which a predetermined tilting dependent on the tilt drive device can be brought about for each of the reflectors (12).

8. A device (100) according to one of the preceding claims,
**characterised by** a drive means for pivoting and tilting a plurality of reflectors (10, 12), in particular with a transmission device, via which a predetermined pivoting and/or tilting dependent on the drive means can be brought about for each of the plurality of reflectors (10, 12).

9. A device (100, 200) according to one of the preceding claims,
**characterised in that** the target (50) is coupled with the spindle arrangement (70, 270) in stationary manner relative to the spindle arrangement (70, 270).

10. A device (100, 200) according to one of the preceding claims,
**characterised in that** the target (50) is movable independently of the spindle arrangement (70, 270), in particular by means of a target drive means.

11. A device (200) according to Claim 1,
**characterised by** a second reflector (210) of the reflectors, which is provided for deflecting solar rays out of the plane of the path of the sun by a second plane angle which differs from the first plane angle and is coupled with a second spindle (220),
the second spindle (220) being tilted and/or tiltable by a second spindle angle relative to the plane of orientation (212) of the spindle arrangement,
the second reflector (210) being tilted and/or tiltable by a second reflector angle relative to the second spindle (220), and
the second spindle angle being opposed to the second reflector angle and the second plane angle.

12. A device (200) according to one of Claims 1 and 11,
**characterised in that** the reflector angle (218) corresponds to the plane angle (214) and the spindle angle (216) corresponds to an opposed half of the plane angle (214).

13. A method for the utilisation of solar energy, with the steps:
- provision of a device (100, 200) for the utilisation of solar energy with a target (50) and reflectors (10, 12, 210), and
- deflection of solar rays on to the target (50) by means of the reflectors (10, 12, 210),
the reflectors (10, 12, 210) being pivoted about a respective spindle (20, 220) for tracking in accordance with the azimuth of the sun (30) during the course of one day, the respective spindle (20, 220) being a component of a common spindle arrangement (70, 270), which is inclined to track in accordance with the noonday height of the sun (30) during the course of one year, and a plane of orientation during operation being oriented perpendicularly to the plane of the path of the sun,
**characterised in that** the provision comprises
arrangement of a first reflector (210) of the reflectors, is provided for deflecting solar rays by a first plane angle (214) out of plane of the path of the sun and is coupled with a first spindle (220),
tilting of the first spindle (220) relative to a plane of orientation (212) of the spindle arrangement (270) by a first spindle angle (216) and
tilting of the first reflector (210) relative to the first spindle (220) by a first reflector angle (218),
the first spindle angle (216) being opposed to the first reflector angle (218) and the first plane angle (214).

## Revendications

1. Dispositif (100, 200) d'utilisation de l'énergie solaire, comportant:
une cible (50) ; et
des réflecteurs (10, 12, 210) pour dévier les rayons solaires sur la cible ;
les réflecteurs (10, 12, 210) pouvant respectivement pivoter autour d'un axe (20, 220) en vue d'un suivi de l'azimut du soleil (30) au cours d'une journée, l'axe correspondant (20, 220) faisant partie d'un assemblage d'axes commun (70, 270) pouvant être incliné en vue du suivi de la hauteur méridienne du soleil (30) au cours d'une année, et comportant un plan d'orientation, pouvant être orienté en service verticalement par rapport au plan de l'orbite solaire ;
**caractérisé en ce qu'**un premier réflecteur (210) des réflecteurs sert à dévier les rayons solaires à un premier angle de plan (214) d'un plan de l'orbite solaire et est couplé à un premier axe (220) ;
le premier axe (220) étant basculé et/ou pouvant être basculé à un premier angle d'axe (216) par rapport au plan d'orientation (212) de l'assemblage d'axes (270) ;
le premier réflecteur (210) étant basculé et/ou pouvant être basculé à un premier angle de réflecteur (218) par rapport au premier axe (220);
le premier angle de l'axe (216) étant opposé au premier angle de réflecteur (218) et au premier angle de plan (214).

2. Dispositif (100, 200) selon la revendication 1,
**caractérisé par** un système d'entraînement pivotant, pour assurer le pivotement commun de plusieurs réflecteurs (10, 12, 210) autour de l'axe correspondant (20, 220), comportant en particulier un premier dispositif de transmission pivotant, permettant un pivotement prédéterminé de chacun des plusieurs réflecteurs (10, 12, 210) en fonction du système d'entrainement pivotant.

3. Dispositif (100, 200) selon l'une des revendications précédentes,
**caractérisé par** un dispositif d'entraînement pivotant affecté à un réflecteur (10, 12, 210) ou à un axe (20, 220), pour assurer le pivotement du réflecteur (10, 12, 210) ou des réflecteurs (10, 12, 210) affectés à l'axe (20, 220), comportant en particulier un deuxième dispositif de transmission pivotant, permettant un pivotement prédéterminé de chacun des réflecteurs (10, 12, 210) en fonction du dispositif d'entraînement pivotant.

4. Dispositif (100) selon l'une des revendications précédentes,
**caractérisé en ce qu'**une partie des réflecteurs (12) est basculée par rapport à l'axe correspondant (20).

5. Dispositif (100) selon l'une des revendications précédentes,
**caractérisé en ce qu'**une partie des réflecteurs (12) peut être basculée par rapport à l'axe correspondant (20).

6. Dispositif selon la revendication 5,
**caractérisé par** un système d'entraînentent basculant pour assurer le basculement commun de plusieurs réflecteurs (12) par rapport à leur axe correspondant (20), comportant en particulier un dispositif de transmission basculant, permettant un basculement prédéterminé de chacun des plusieurs réflecteurs (12) en fonction du système d'entraînement basculant.

7. Dispositif (100) selon l'une des revendications 5 ou 6,
**caractérisé par** un dispositif d'entraînement basculant affecté à un réflecteur (12) ou à un axe (20), pour assurer le basculement du réflecteur (12) ou des réflecteurs (12) affectés à l'axe (20), comportant en particulier un deuxième dispositif de transmission basculant, permettant un basculement prédéterminé de chacun des réflecteurs (12) en fonction du dispositif d'entraînement basculant.

8. Dispositif (100) selon l'une des revendications précédentes,
**caractérisé par** un dispositif d'entraînement pour assurer le pivotement ou le basculement de plusieurs réflecteurs (10, 12), comportant en particulier un dispositif de transmission permettait un pivotement et/ou un basculement prédéterminé de chacun des plusieurs réflecteurs (10, 12) en fonction du dispositif d'entraînement.

9. Dispositif (100, 200) selon l'une des revendications précédentes ;
**caractérisé en ce que** la cible (50) est couplée à l'assemblage d'axes (70, 270) de manière fixe par rapport à l'assemblage d'axe (70, 270).

10. Dispositif (100, 200) selon l'une des revendications précédentes,
**caractérisé en ce que** la cible (50) peut être déplacée indépendamment de l'assemblage d'axes, en particulier par l'intermédiaire d'un dispositif d'entraînement de la cible.

11. Dispositif (200) selon la revendication 1 ;
**caractérisé par** un deuxième réflecteur (210) des réflecteurs, prévu pour dévier les rayons solaires à un deuxième angle de plan, différent du premier angle de plan, à partir du plan de l'orbite solaire, et couplé à un deuxième axe (220) ;
le deuxième axe (220) étant basculé et/ou pouvant être basculé à un deuxième angle d'axe par rapport au plan d'orientation (212) de l'assemblage d'axes ;
le deuxième réflecteur (210) étant basculé et/ou pouvant être basculé à un deuxième angle de réflecteur par rapport au deuxième axe (220) ;
le deuxième angle de l'axe étant opposé au deuxième angle de réflecteur et au deuxième angle de plan.

12. Dispositif (200) selon l'une des revendications 1 et 11 ;
**caractérisé en ce que** l'angle de réflecteur (218) correspond à l'angle de plan (214), l'angle de l'axe (216) correspondant à une moitié opposée de l'angle de plan (214).

13. Procédé d'utilisation de l'énergie solaire, comportant les étapes ci-dessous :
fourniture d'un dispositif (100, 200) d'utilisation de l'énergie solaire, comportant une cible (50) et des réflecteurs (10, 12, 210) ; et
déviation des rayons solaires sur la cible (50) par l'intermédiaire des réflecteurs (10, 12, 210) ;
les réflecteurs (10, 12, 210) étant basculés autour d'un axe correspondant (20, 220) en vue d'un suivi de l'azimut du soleil (30) au cours d'une journée, l'axe correspondant (20, 220) faisant partie d'un assemblage d'axes commun (70, 270), incliné en vue d'un suivi de la hauteur méridienne du soleil (30) au cours d'une année, un plan d'orientation étant incliné en service verticalement par rapport au plan de l'orbite solaire ;
**caractérisé en ce que** l'étape de fourniture comprend les étapes ci-dessous :
agencement d'un premier réflecteur (210) des réflecteurs, servant à dévier les rayons solaires à un premier angle de plan (214) à partir d'un plan de l'orbite solaire et couplé à un premier axe (220) ;
basculement du premier axe (220) par rapport à un plan d'orientation (212) de l'assemblage d'axes (270) à un premier angle d'axe (216) ; et
basculement du premier réflecteur (210) par rapport au premier axe (220) à un premier angle de réflecteur (218) ;
le premier angle d'axe (216) étant opposé au premier angle de réflecteur (218) et au premier angle de plan (214).
